# EUROPEAN PATENT APPLICATION

(11) **EP 4 664 978 A1**
(43) Date of publication of application: **17.12.2025**
(21) Application number: 24791898.0
(22) Date of filing: 10.04.2024
(51) Int. Cl.: H04W 24/10

(54) **POSITIONING DATA TRANSMISSION METHODS AND APPARATUS**

(30) Priority: 17.04.2023 CN 202310420829
(71) Applicant: Huawei Technologies Co., Ltd., Shenzhen, Guangdong 518129 (CN)
(72) Inventor: WANG, Han, Shenzhen, Guangdong 518129 (CN); LI, Cheng, Shenzhen, Guangdong 518129 (CN)
(74) Representative: Grünecker Patent- und Rechtsanwälte PartG mbB
(86) International application number: PCT/CN2024/087092
(87) International publication number: WO 2024/217313

(57) **Abstract**

This application provides a positioning data transmission method and an apparatus. The method includes: A location management apparatus sends a first request to a first communication apparatus; the first communication apparatus measures a positioning reference signal from a second communication apparatus based on the first request, to obtain at least one first time measurement result and at least one carrier phase measurement result; then the first communication apparatus sends first information to the location management apparatus; and the location management apparatus positions the second communication apparatus or the first communication apparatus based on the first information, where the first information includes a second time measurement result and the at least one carrier phase measurement result. In this way, the at least one carrier phase measurement result and the second time measurement result that is obtained by processing the at least one first time measurement result are included in the first information and reported to the location management apparatus. Therefore, the number of reported first time measurement results can be reduced, and resource overheads of the measurement result in a transmission process can be effectively reduced.

## Description

### CROSS-REFERENCE TO RELATED APPLICATIONS

This application claims priority to Chinese Patent Application No. 202310420829.6, filed with the China National Intellectual Property Administration on April 17, 2023 and entitled "POSITIONING DATA TRANSMISSION METHOD AND APPARATUS", which is incorporated herein by reference in its entirety.

### TECHNICAL FIELD

This application relates to the field of communication technologies, and in particular, to a positioning data transmission method and an apparatus.

### BACKGROUND

With rapid development of communication technologies, high-precision positioning is gradually determined as an important research project in 5th generation mobile communication systems (5th generation mobile networks or 5th generation wireless systems, 5G) of the 3rd generation partnership project (3rd generation partnership project, 3GPP). The carrier phase positioning technology is currently one of main methods for implementing high-precision positioning, in which a distance with integer ambiguity is measured by measuring changes in carrier phases of positioning reference signals from a transmit end to a receive end, thereby obtaining a high-precision positioning result.

However, high resource overheads are caused in a measurement result reporting process after a positioning reference signal is measured in the existing carrier phase positioning technology. In addition, a specific manner of jointly reporting a carrier phase measurement result and a conventional time measurement result is unclear. In view of this, there is an urgent need for a solution about how to effectively reduce resource overheads of a measurement result in a transmission process and how to jointly report a carrier phase measurement result and a time measurement result.

### SUMMARY

Embodiments of this application provide a positioning data transmission method and an apparatus, to effectively reduce resource overheads of a measurement result in a transmission process.

According to a first aspect, an embodiment of this application provides a positioning data transmission method. The method may be implemented by exchanging data between a first communication apparatus, a second communication apparatus, and a location management apparatus. In the method, the location management apparatus may first send a first request to the first communication apparatus, and after receiving the first request, the first communication apparatus may measure a positioning reference signal from the second communication apparatus, to obtain at least one first time measurement result and at least one carrier phase measurement result. Then, the first communication apparatus may send first information to the location management apparatus. After receiving the first information, the location management apparatus may position the second communication apparatus or the first communication apparatus. The first request is used to request to report a measurement result of the positioning reference signal, the first information includes a second time measurement result and the at least one carrier phase measurement result, the second time measurement result is obtained by the first communication apparatus based on the at least one first time measurement result, and the second time measurement result is associated with the at least one carrier phase measurement result.

In the foregoing design, the first communication apparatus correspondingly processes the at least one first time measurement result to obtain the second time measurement result, associates the second time measurement result with the at least one carrier phase measurement result and includes them in the first information, and reports the first information to the location management apparatus. Therefore, the number of reported first time measurement results can be effectively reduced, so that resource overheads of the measurement result in a transmission process can be effectively reduced, and the carrier phase measurement result and the time measurement result can be jointly reported. In addition, the second time measurement result and the one or more carrier phase measurement results are reported together to the location management apparatus. Therefore, this can effectively assist the location management apparatus in performing corresponding carrier phase resolution. In addition, the first communication apparatus reports the one or more carrier phase measurement results to the location management apparatus, so that the location management apparatus can obtain more carrier phase information and perform corresponding carrier phase resolution. Therefore, carrier phase positioning precision can be effectively improved.

According to a second aspect, an embodiment of this application provides a positioning data transmission method. The method may be performed by a first communication apparatus or a component (for example, a chip system or a circuit) that can support the first communication apparatus in implementing a function required by the method. Optionally, an example in which the first communication apparatus performs the positioning data transmission method is used. In the method, after receiving a first request from a location management apparatus, the first communication apparatus measures a positioning reference signal from a second communication apparatus, to obtain at least one first time measurement result and at least one carrier phase measurement result. Then, the first communication apparatus may send first information to the location management apparatus, where the first request is used to request to report a measurement result of the positioning reference signal, the first information includes a second time measurement result and at least one carrier phase measurement result, the second time measurement result is obtained by the first communication apparatus based on the at least one first time measurement result, and the second time measurement result is associated with the at least one carrier phase measurement result.

Optionally, when the first communication apparatus is configured to implement a function of a first communication apparatus in an embodiment of the positioning data transmission method provided in this application, for beneficial effects, refer to related descriptions of the first communication apparatus in the first aspect. Details are not described herein again.

According to a third aspect, an embodiment of this application provides a positioning data transmission method. The method may be performed by a location management apparatus, or a component (for example, a chip system or a circuit) that can support a location management apparatus in implementing a function required by the method. Optionally, an example in which the location management apparatus performs the positioning data transmission method is used. In the method, the location management apparatus first sends a first request to a first communication apparatus, and then the location management apparatus may receive first information from the first communication apparatus. Then, the location management apparatus may position a second communication apparatus or the first communication apparatus based on the first information, where the first request is used to request to report a measurement result of a positioning reference signal, the first information includes a second time measurement result and at least one carrier phase measurement result, the second time measurement result is associated with the at least one carrier phase measurement result, the second time measurement result is obtained by the first communication apparatus based on at least one first time measurement result, and the at least one first time measurement result and the at least one carrier phase measurement result are obtained by the first communication apparatus by measuring the positioning reference signal from the second communication apparatus.

In the foregoing design, because the location management apparatus can receive the second time measurement result and one or more carrier phase measurement results once, the location management apparatus can obtain more carrier phase information, and can perform positioning more accurately based on the more carrier phase information. Therefore, carrier phase positioning precision can be effectively improved.

In a possible design, the method further includes: The first communication apparatus may alternatively directly associate the at least one first time measurement result with the at least one carrier phase measurement result, and report them to the location management apparatus; the first communication apparatus may separately report the at least one first time measurement result and the at least one carrier phase measurement result to the location management apparatus; or the first communication apparatus may separately report the second time measurement result and the at least one carrier phase measurement result to the location management apparatus.

In a possible design, when there is one second time measurement result, the second time measurement result is associated with the at least one carrier phase measurement result; or
when there are a plurality of second time measurement results, the plurality of second time measurement results are associated with the at least one carrier phase measurement result.

Optionally, in an example, when there is one second time measurement result (for example, an RTOA) and there is one carrier phase measurement result (for example, an RSCP), the second time measurement result RTOA is associated with the RSCP.

In another example, when there is one second time measurement result (for example, an RTOA) and there are two carrier phase measurement results (for example, two RSCPs), the second time measurement result RTOA is associated with the two RSCPs.

In still another example, when there is one second time measurement result (for example, an RTOA) and there are two carrier phase measurement results (for example, an RSCP and an RSCPD), the second time measurement result RTOA is associated with the RSCP and the RSCPD.

In still another example, when there are two second time measurement results (for example, an RTOA and a receive-transmit time difference) and there is one carrier phase measurement result (for example, an RSCP), the second time measurement results: the RTOA and the receive-transmit time difference, are associated with the RSCP.

In still another example, when there are two second time measurement results (for example, an RTOA and a receive-transmit time difference) and there are two carrier phase measurement results (for example, RSCPs), the second time measurement results: the RTOA and the receive-transmit time difference, are associated with the two RSCPs.

In still another example, when there are two second time measurement results (for example, an RTOA and a receive-transmit time difference) and there are two carrier phase measurement results (for example, an RSCP and an RSCPD), the second time measurement results: the RTOA and the receive-transmit time difference, are associated with the RSCP and the RSCPD.

In the foregoing design, the one or more second time measurement results are associated with the at least one carrier phase measurement result and then reported to the location management apparatus, so that the location management apparatus can be assisted in performing carrier phase resolution more accurately. Therefore, carrier phase positioning precision can be improved.

In a possible design, when there is one first time measurement result and there are one or more carrier phase measurement results, the first time measurement result is associated with the one or more carrier phase measurement results; when there are a plurality of first time measurement results and one carrier phase measurement result, the plurality of first time measurement results are associated with the carrier phase measurement result; when there are a plurality of first time measurement results and a plurality of carrier phase measurement results, the plurality of first time measurement results are associated with a part or all of the plurality of carrier phase measurement results; or when there are a plurality of first time measurement results and a plurality of carrier phase measurement results, a part of the plurality of first time measurement results are associated with a part or all of the plurality of carrier phase measurement results.

Optionally, in an example, when there is one first time measurement result (for example, an RTOA) and there are two carrier phase measurement results (for example, RSCPs), the RTOA is associated with the two RSCPs.

In another example, when there is one first time measurement result (for example, an RTOA) and there are two carrier phase measurement results (for example, an RSCP and an RSCPD), the RTOA is associated with the RSCP and the RSCPD.

In still another example, when there are two first time measurement results (for example, an RTOA and a receive-transmit time difference) and there is one carrier phase measurement result (for example, an RSCP), the two time measurement results: the RTOA and the receive-transmit time difference, are associated with the RSCP.

In still another example, when there are two first time measurement results (for example, an RTOA and a receive-transmit time difference) and there are two carrier phase measurement results (for example, an RSCP and an RSCPD), the two time measurement results: the RTOA and the receive-transmit time difference, are associated with one or both of the RSCP and the RSCPD.

In still another example, when there are two first time measurement results (for example, an RTOA and a receive-transmit time difference) and there are two carrier phase measurement results (for example, RSCPs), the two time measurement results: the RTOA and the receive-transmit time difference, are associated with one or both of the two RSCPs.

In still another example, when there are two first time measurement results (for example, an RTOA and a receive-transmit time difference) and there are several carrier phase measurement results (for example, RSCPs), one of the two time measurement results: the RTOA and the receive-transmit time difference, is associated with one or both of the two RSCPs.

In a possible design, the first request includes measurement time information for measuring the positioning reference signal, and the measurement time information includes one of the following content: a measurement time window or a measurement timestamp.

In the foregoing design, the first request carries the measurement time information for measuring the positioning reference signal, so that the first communication apparatus can simultaneously measure positioning reference signals from one or more second communication apparatuses at a corresponding time point, and report the first information. In this way, it can be ensured that the location management apparatus can perform differential calculation processing by using carrier phase measurement results obtained by the first communication apparatus at the same time, so that a random phase error on a terminal side (for example, a terminal device or a positioning assistance node) and/or a base station side can be eliminated, and another carrier phase deviation can be eliminated. Therefore, carrier phase positioning precision can be improved.

In a possible design, the first request further includes indication information, and the indication information indicates that the number of reported time measurement results is the same as the number of reported carrier phase measurement results, or the indication information indicates that the number of reported time measurement results is different from the number of reported carrier phase measurement results.

In the foregoing design, the indication information is carried in the first request, to help the location management apparatus clearly learn of a value relationship between the quantity of reported time measurement results and the quantity of reported carrier phase measurement results. Therefore, the location management apparatus can more accurately report the time measurement results and the carrier phase measurement results.

In a possible design, when there is one first time measurement result, the first communication apparatus may use the first time measurement result as the second time measurement result, associate the second time measurement result with the at least one carrier phase measurement result, include them in the first information, and report the first information to the location management apparatus.

In a possible design, when there are a plurality of first time measurement results, the second time measurement result is obtained by smoothing the plurality of first time measurement results; or when there are a plurality of first time measurement results, a first time measurement result corresponding to a largest measurement timestamp in the plurality of first time measurement results is used as the second time measurement result.

In the foregoing design, when there are a plurality of first time measurement results, the first communication apparatus may correspondingly process the plurality of first time measurement results in different forms of processing manners, to obtain the second time measurement result. In this way, the processing manners are flexible and diversified, and can satisfy different use requirements of the first communication apparatus.

In a possible design, the second time measurement result and the at least one carrier phase measurement result are sent via same reporting information, or the second time measurement result and the at least one carrier phase measurement result are sent in a same reporting period.

In the foregoing design, the second time measurement result and the at least one carrier phase measurement result are sent via the same reporting information or sent in the same reporting period, so that different second time measurement results may be associated with at least one different carrier phase measurement result. This helps the location management apparatus perform carrier phase positioning resolution by using the time measurement result and the carrier phase measurement result that are associated. Therefore, carrier phase positioning precision can be improved.

In a possible design, the second time measurement result corresponds to a first measurement timestamp, each of the at least one carrier phase measurement result corresponds to one second measurement timestamp, and the first measurement timestamp corresponds to one of the at least one second measurement timestamp respectively corresponding to the at least one carrier phase measurement result.

In the foregoing design, when the first communication apparatus sends the first information to the location management apparatus, each carrier phase measurement result included in the first information corresponds to one measurement timestamp, and the second time measurement result corresponds to one corresponding measurement timestamp, so that the location management apparatus can accurately learn of a measurement timestamp corresponding to each carrier phase measurement result in a timely manner. This may help the location management apparatus perform differential calculation processing by using carrier phase measurement results obtained by different first communication apparatus through measurement at the same time. Therefore, this helps improve carrier phase positioning precision.

In a possible design, the first time measurement result or the second time measurement result includes at least one of the following: a relative time of arrival RTOA, a reference signal time difference RSTD, or a receive-transmit time difference; and the carrier phase measurement result includes at least one of the following: a reference signal carrier phase RSCP, a reference signal carrier phase difference RSCPD, carrier phases of a plurality of subbands, a carrier phase difference in a plurality of subbands, carrier phases of a plurality of frequencies, or a carrier phase difference in a plurality of frequencies.

According to a fourth aspect, an embodiment of this application provides a possible positioning data transmission apparatus. Optionally, the positioning data transmission apparatus may be a first communication apparatus or a location management apparatus, or may be a chip or a circuit disposed in the first communication apparatus or the location management apparatus. Optionally, when the positioning data transmission apparatus is the chip disposed in the first communication apparatus or the location management apparatus, the positioning data transmission apparatus includes a transceiver and a processor, but does not include a memory. The transceiver exists as an input/output interface, and the input/output interface is used by the chip to implement receiving and sending of the communication device. The input/output interface may include an input interface and/or an output interface. The input interface may implement receiving of the communication device, and the output interface may be configured to implement sending of the communication device. The processor is configured to read and execute a corresponding computer program or instructions, so that a corresponding function of the first communication apparatus or the location management apparatus is implemented. In an example, when the positioning data transmission apparatus is configured to implement a function of a first communication apparatus in an embodiment of the positioning data transmission method provided in this application, for beneficial effects, refer to the descriptions about the first communication apparatus in the first aspect or the descriptions about the first communication apparatus in the second aspect. Details are not described herein again. The positioning data transmission apparatus has a function of implementing behavior related to the first communication apparatus in the method example of the first aspect or the second aspect. The function may be implemented by hardware, or may be implemented by hardware executing corresponding software. The hardware or the software includes one or more modules corresponding to the foregoing function. In a possible design, the positioning data transmission apparatus includes a communication module (or referred to as a transceiver module, configured to send and receive data) and a processing module, where the communication module is configured to receive a first request from a location management apparatus, where the first request is used to request to report a measurement result of a positioning reference signal; and the processing module is configured to measure the positioning reference signal from a second communication apparatus, to obtain at least one first time measurement result and at least one carrier phase measurement result; and the communication module is further configured to send first information to the location management apparatus, where the first information includes a second time measurement result and the at least one carrier phase measurement result, the second time measurement result is obtained based on the at least one first time measurement result, and the second time measurement result is associated with the at least one carrier phase measurement result. The modules may perform a corresponding function of the first communication apparatus in the method example in the first aspect or the second aspect. For details, refer to detailed descriptions of the corresponding function of the first communication apparatus in the method example. Details are not described herein again.

In another example, when the positioning data transmission apparatus is configured to implement a function of a location management apparatus in an embodiment of the positioning data transmission method provided in this application, for beneficial effects, refer to the descriptions about the location management apparatus in the first aspect or the descriptions about the location management apparatus in the third aspect. Details are not described herein again. The positioning data transmission apparatus has a function of implementing behavior of the location management apparatus in the method example of the first aspect or the second aspect. The function may be implemented by hardware, or may be implemented by hardware executing corresponding software. The hardware or the software includes one or more modules corresponding to the foregoing function. In a possible design, the positioning data transmission apparatus includes a communication module (or referred to as a transceiver module, configured to send and receive data) and a processing module, where the communication module is configured to send a first request to a first communication apparatus, where the first request is used to request to report a measurement result of a positioning reference signal; the communication module is further configured to receive first information from the first communication apparatus, where the first information includes a second time measurement result and at least one carrier phase measurement result, the second time measurement result is associated with the at least one carrier phase measurement result, the second time measurement result is obtained based on at least one first time measurement result, and the at least one first time measurement result and the at least one carrier phase measurement result are obtained by the first communication apparatus by measuring the positioning reference signal from a second communication apparatus; and the processing module is configured to position the second communication apparatus or the first communication apparatus based on the first information. The modules may perform a corresponding function of the location management apparatus in the method example in the first aspect or the third aspect. For details, refer to detailed descriptions of the corresponding function of the location management apparatus in the method example. Details are not described herein again.

According to a fifth aspect, an embodiment of this application provides a communication device. The communication device may be an apparatus (for example, a first communication apparatus, a second communication apparatus, or a location management apparatus) required for performing a positioning data transmission method provided in embodiments of this application, may be a device including an apparatus required for performing the positioning data transmission method provided in embodiments of this application, or may be a device having a function required for implementing the positioning data transmission method. The communication device may include a transceiver and a processor. Optionally, the communication device further includes a memory. The memory is configured to store a computer program or instructions. The processor is coupled to the memory and the transceiver. When the processor executes the computer program or the instructions, the communication device is caused to perform the method according to the first aspect, the method according to the second aspect, or the method according to the third aspect. In an example, the transceiver may be a transceiver apparatus integrated with a data transceiver function. In another example, the transceiver may alternatively include a transmitter and a receiver. The transmitter is configured to send data, and the receiver is configured to receive data. Optionally, the communication device may alternatively be a chip disposed in the first communication apparatus, the second communication apparatus, or the location management apparatus. When the communication device is a chip, the communication device includes a transceiver and a processor, but does not include a memory. The transceiver exists as an input/output interface, and the input/output interface is used by the chip to implement receiving and sending of the communication device. The input/output interface may include an input interface and/or an output interface. The input interface may implement receiving of the communication device, and the output interface may be configured to implement sending of the communication device. The processor is configured to read and execute a corresponding computer program or instructions, so that the chip implements a corresponding function of the first communication apparatus, the second communication apparatus, or the location management apparatus.

According to a sixth aspect, an embodiment of this application provides a communication system. The communication system may include the first communication apparatus, the second communication apparatus, the location management apparatus, and the like mentioned above.

Optionally, the communication system may include one or more first communication apparatuses, one or more second communication apparatuses, and one or more location management apparatuses.

According to a seventh aspect, an embodiment of this application provides a computer program product. The computer program product includes a computer program or instructions. When the computer program or the instructions are run on a computer, the computer is caused to perform the method according to the first aspect, the method according to the second aspect, or the method according to the third aspect.

According to an eighth aspect, an embodiment of this application provides a computer-readable storage medium. The computer-readable storage medium stores a computer program or instructions. When the computer program or the instructions are run on a computer, the computer is caused to perform the method according to the first aspect, the method according to the second aspect, or the method according to the third aspect.

According to a ninth aspect, this application provides a chip, including a processor, where the processor is coupled to a memory, and is configured to execute a computer program or instructions stored in the memory; and when the processor executes the computer program or the instructions, the method according to the first aspect, the method according to the second aspect, or the method according to the third aspect is implemented.

According to a tenth aspect, an embodiment of this application further provides a chip system. The chip system includes a processor, configured to support a computer apparatus in implementing the method according to the first aspect, the method according to the second aspect, or the method according to the third aspect. In a possible design, the chip system further includes a memory, and the memory is configured to store a program and data that are necessary for the computer apparatus. The chip system may include a chip; or may include a chip and another discrete device.

In this application, based on the implementations provided in the foregoing aspects, the implementations may further be combined to provide more implementations.

### BRIEF DESCRIPTION OF DRAWINGS

FIG. 1 exemplarily illustrates a diagram of an architecture of a possible communication system according to an embodiment of this application;
FIG. 2a exemplarily illustrates a diagram of a network architecture of a communication system according to an embodiment of this application;
FIG. 2b exemplarily illustrates a diagram of a network architecture of another communication system according to an embodiment of this application;
FIG. 3 exemplarily illustrates a schematic flowchart of a positioning data transmission method according to an embodiment of this application;
FIG. 4 exemplarily illustrates a schematic flowchart of another positioning data transmission method according to an embodiment of this application;
FIG. 5A and FIG. 5B exemplarily illustrate a schematic flowchart of another positioning data transmission method according to an embodiment of this application;
FIG. 6 exemplarily illustrates a schematic flowchart of another positioning data transmission method according to an embodiment of this application;
FIG. 7A and FIG. 7B exemplarily illustrate a schematic flowchart of another positioning data transmission method according to an embodiment of this application;
FIG. 8 exemplarily illustrates a diagram of a structure of a possible positioning data transmission apparatus according to an embodiment of this application; and
FIG. 9 exemplarily illustrates a diagram of a structure of a possible communication device according to an embodiment of this application.

### DESCRIPTION OF EMBODIMENTS

A positioning data transmission solution provided in embodiments of this application may be applied to a scenario in which a reference signal is transmitted between a first communication apparatus (for example, a network device) and a second communication apparatus (for example, a terminal device, a positioning assistance node, or a terminal device and a positioning assistance node). In an example, when the first communication apparatus is a network device, and the second communication apparatus is a terminal device (or a positioning assistance node, or a terminal device and a positioning assistance node), the first communication apparatus measures an uplink positioning reference signal (for example, the uplink positioning reference signal may be a sounding reference signal (Sounding reference signal, SRS) or a sounding reference signal used for positioning) from the second communication apparatus, and a measurement result of the uplink positioning reference signal may be used to position the terminal device. In another example, when the first communication apparatus is a terminal device (or a positioning assistance node, or a terminal device and a positioning assistance node), and the second communication apparatus is a network device, the first communication apparatus measures a downlink positioning reference signal from the second communication apparatus (for example, the downlink positioning reference signal may be a positioning reference signal (Positioning reference signal, PRS) or a downlink reference signal used for positioning), and a measurement result of the downlink positioning reference signal may be used to position the terminal device. For example, the first communication apparatus may be a network device (or a chip inside the network device), and the second communication apparatus may be a terminal device (or a chip inside the terminal device), or the second communication apparatus may be a terminal device (or a chip inside the terminal device) and a positioning assistance node (or a chip inside the positioning assistance node) corresponding to the terminal device. For another example, the first communication apparatus may be a terminal device (or a chip inside the terminal device), and the second communication apparatus may be a network device (or a chip inside the network device), or the first communication apparatus may be a terminal device (or a chip inside the terminal device) and a positioning assistance node (or a chip inside the positioning assistance node) corresponding to the terminal device. For example, the positioning assistance node may include but is not limited to a positioning reference unit (Positioning Reference Unit, PRU). Optionally, the positioning data transmission solution provided in embodiments of this application may further be applied to a sidelink (sidelink) positioning scenario.

Optionally, sidelink (sidelink, SL) in embodiments of this application may also be referred to as side link, sidelink, direct link, side-link, secondary link, or the like. In embodiments of this application, all of the foregoing terms refer to a link established between devices of a same type, and have a same meaning. The devices of the same type may be a link between terminal devices, or the like. The link between the terminal devices may be a D2D link defined in 3GPP release (Rel)-12/13/14/15; may be a vehicle-to-vehicle, vehicle-to-mobile, or vehicle-to-any entity V2X link defined by the 3GPP for an internet of vehicles; or may be a V2X link of another release (for example, Rel-16 or a later release) based on an NR system.

The following describes in detail embodiments of this application with reference to the accompanying drawings.

The following describes an architecture of a possible communication system to which a positioning data transmission method provided in this application is applicable. It should be noted that the descriptions are for ease of understanding by a person skilled in the art, and are not intended to limit the protection scope claimed by this application.

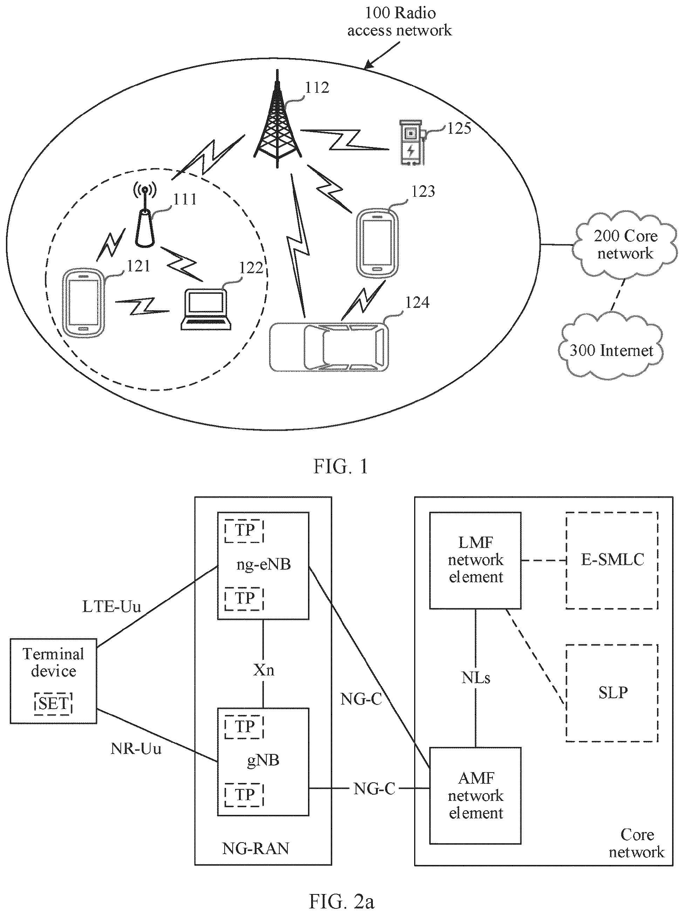

FIG. 1 exemplarily illustrates a diagram of an architecture of a possible communication system to which an embodiment of this application is applicable. As shown in FIG. 1, the architecture of the communication system includes a radio access network 100 and a core network 200. Optionally, the architecture of the communication system may further include an internet 300. The radio access network 100 may include at least one radio access network device (for example, a radio access network device 111 and a radio access network device 112) and at least one terminal device (for example, a terminal device 121, a terminal device 122, a terminal device 123, a terminal device 124, and a terminal device 125). Optionally, the terminal device may be connected to the radio access network device in a wireless manner, and the radio access network device may be connected to the core network 200 in a wireless or wired manner. A core network device and the radio access network device may be independent and different physical devices, functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. For example, the architecture of the communication system may further include another network device (for example, a wireless relay device or a wireless backhaul device).

The following briefly describes functions of some devices included in the architecture of the communication system.

The network device in embodiments of this application may be any device having a wireless transceiver function. For example, the network device may be a radio access network (radio access network, RAN) device that connects the terminal device to a wireless network. For example, the RAN device may include but is not limited to a next generation NodeB (next generation NodeB, gNB) in a 5th generation (5th generation, 5G) communication system, a next generation base station in a 6th generation (6th generation, 6G) communication system, a base station in a future communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

Optionally, in a network structure, the RAN device may further include a central unit (centralized unit, CU) or a distributed unit (distributed unit, DU). In this structure, protocol layers of the network device are split. Functions of some protocol layers are centrally controlled by the CU, functions of some or all of remaining protocol layers are distributed in a DU, and the CU centrally controls the DU. For example, functions of a PDCP layer and a protocol layer above the PDCP layer may be set on the CU, and functions of protocol layers (for example, an RLC layer and a MAC layer) below the PDCP layer are set on the DU. It should be noted that such protocol layer division is merely an example, and division may alternatively be performed at another protocol layer. A radio frequency apparatus may be remotely deployed and not placed in the DU, or may be integrated into the DU, or may be partially remotely deployed and partially integrated into the DU. This is not limited in embodiments of this application. In addition, in some embodiments, a control plane (control plan, CP) and a user plane (user plan, UP) of the CU may be further separated into different entities for implementation, where the entities are respectively a control-plane CU entity (CU-CP entity) and a user-plane CU entity (CU-UP entity).

In embodiments of this application, the RAN device may be a macro base station (for example, the radio access network device 112 in FIG. 1), may be a micro base station or an indoor base station (for example, the radio access network device 111 in FIG. 1), or may be a relay node, a donor node, or the like. A specific technology and a specific device form that are used by the radio access network device are not limited in embodiments of this application.

For example, an example in which the RAN device is a base station is used below for description. Communication between a base station and a terminal device, between base stations, and between terminal devices may be performed over a licensed spectrum, may be performed over an unlicensed spectrum, or may be performed over both a licensed spectrum and an unlicensed spectrum.

In embodiments of this application, a function of the base station may be performed by a module (for example, a chip) in the base station, or may be performed by a control subsystem including the function of the base station. The control subsystem including the function of the base station herein may be a control center in application scenarios, such as a smart grid, industrial control, smart transportation, and a smart city. In addition, a function of the terminal device may alternatively be performed by a module (for example, a chip or a modem) in the terminal device, or may be performed by an apparatus including the function of the terminal device.

In embodiments of this application, the base station may send a downlink signal or downlink information to the terminal device, where the downlink information is carried on a downlink channel. For example, one base station may send a downlink signal or downlink information to one terminal device, a plurality of base stations may send downlink signals or downlink information to one terminal device, or a plurality of base stations may separately send downlink signals or downlink information to a plurality of terminal devices. In addition, the terminal device may send an uplink signal or uplink information to the base station, where the uplink information is carried on an uplink channel. For example, one terminal device may send an uplink signal or uplink information to one base station, one terminal device may send an uplink signal or uplink information to a plurality of base stations, a plurality of terminal devices may send uplink signals or uplink information to one base station, or a plurality of terminal devices may separately send uplink signals or uplink information to a plurality of base stations. To communicate with the base station, the terminal device needs to establish a wireless connection to a cell controlled by the base station. The cell that establishes the wireless connection to the terminal device is referred to as a serving cell of the terminal device.

The terminal device is an entity that has a wireless transceiver function on a user side, and may provide service functions such as a video, a voice, and data connectivity for a user. Optionally, the terminal device may be deployed on land, where the deployment includes indoor or outdoor, or handheld or vehicle-mounted deployment; may be deployed on water (for example, on a ship); or may be deployed in air (for example, on an airplane, a balloon, or a satellite).

Optionally, the terminal device may also be referred to as a terminal, a user equipment (user equipment, UE), an access terminal device, a vehicle-mounted terminal, an industrial control terminal, a UE unit, a UE station, a mobile station (mobile station, MS), a mobile terminal (mobile terminal, MT), a remote station, a remote terminal device, a mobile device, a UE terminal device, a terminal device, a wireless communication device, a UE agent, a UE apparatus, or the like. In embodiments of this application, the terminal device may be at a fixed location, or may be mobile. This is not limited in embodiments of this application.

For example, the terminal device may be a mobile phone (mobile phone), a tablet computer (Pad), a subscriber unit (subscriber unit), a cellular phone (cellular phone), a smartphone (smartphone), a wireless data card, a personal digital assistant (Personal Digital Assistant, PDA) computer, a wireless modem (modem), a handheld device (handset), a laptop computer (laptop computer), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, a vehicle, an unmanned aerial vehicle, a helicopter, an airplane, a factory machine/device, a machine type communication (Machine Type Communication, MTC) terminal, a ship, or a robot. Neither of a specific technology and a specific device form used by the terminal device is limited in embodiments of this application.

The core network (core network, CN) 200 may include a network device that processes and forwards signaling and data of a user. For example, the core network 200 may include but is not limited to at least one of the following: an access and mobility management function (Access and Mobility Management Function, AMF) network element (or referred to as an AMF module or component), a session management function (Session Management Function, SMF) network element (or referred to as an SMF module or component), a user plane gateway, a location management device, or the like.

The AMF network element (or referred to as an AMF module or a component) is configured to be responsible for access control and mobility management for accessing an operator network by the terminal device. For example, functions that may be implemented by the AMF network element include but are not limited to mobility status management, temporary user identity allocation, and user authentication and authorization. The SMF network element (or referred to as an SMF module or component) is configured to implement functions such as performing session management, executing a control policy delivered by a PCF, selecting a UPF, and allocating an internet protocol (internet protocol, IP) address of the terminal device. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane network element functional entity (user plane function, UPF), is usually located on a network side. The location management device has a positioning function. The location management device in embodiments of this application may include a location management function (location management function, LMF) network element (or referred to as an LMF module or component) or a location management component (location management component, LMC), may be a local location management function (local location management function, LLMF) network element (or referred to as an LLMF module or component) located in a network device, or may be a location server. This is not limited in embodiments of this application. Certainly, the core network 200 may further include other network elements (for example, a network slice selection function (network slice Selection function, NSSF) network element, a network exposure function (network exposure function, NEF) network element, a network repository function (network function repository function, NRF) network element, an application function (application function, AF) network element, or a policy control function (Policy Control Function, PCF) network element), which are not listed one by one herein.

Based on the architecture of the communication system shown in FIG. 1, FIG. 2a exemplarily illustrates a network architecture of a communication system to which an embodiment of this application is applicable. As shown in FIG. 2a, the network architecture of the communication system is described by using a positioning network architecture based on a NG-RAN (Next Generation Radio Access Network) as an example. The network architecture of the communication system may include three parts: a next generation radio access network (next generation radio access network, NG-RAN), a terminal device, and a core network.

The core network includes an LMF network element (or referred to as an LMF module or component), an AMF network element, a service location protocol (service location protocol, SLP), an evolved serving mobile location center (evolved serving mobile location center, E-SMLC), and the like. A location server, namely, the LMF network element, is connected to the AMF network element, and the LMF network element and the AMF network element are connected through an NLs interface. The terminal device communicates with a serving base station through a Uu link. An Ng-eNB is a base station in a long term evolution (long term evolution, LTE) communication system, a gNB is a base station in a 5G new radio (new radio, NR) communication system, and the base stations communicate with each other through an Xn interface. The base station and the AMF network element communicate with each other through an NG-C interface, and the AMF network element is equivalent to a router for communication between the gNB and the LMF network element. The LMF network element implements location estimation of the terminal device, and the AMF network element and the LMF network element communicate with each other through the NLs interface. The LMF network element is responsible for supporting different types of location services related to the terminal device, including positioning the terminal device and transferring assistance data to the terminal device. The LMF network element may perform positioning calculation on the terminal device based on a measurement result of another device. The AMF network element may receive a terminal device-related location service request from a 5th generation core network location service (5th generation core network location service, 5GC LCS) entity, or the AMF network element may start some location services on behalf of a specific terminal device, and forward the location service request to the LMF network element. After obtaining location information returned by the terminal device, the AMF network element returns the related location information to the 5GC LCS entity.

For example, the NG-RAN may include a next generation NodeB (next generation NodeB, gNB), a next generation evolved NodeB (next generation evolved NodeB, ng-eNB), and the like. The gNB and the ng-eNB are connected through the Xn interface, and the LMF and the ng-eNB/gNB are connected through the NG-C interface. Optionally, the gNB may be a base station, an access point, or the like in various forms; or the gNB may be a TRP for receiving and sending a reference signal, a transmission measurement function (Transmission measurement function, TMF), or the like. The ng-eNB may be a base station, an access point, or the like in various forms, or the ng-eNB may be a TRP for receiving and sending a reference signal, or the like.

Optionally, for one or more network devices on an NG-RAN side, a resource used to send a downlink positioning reference signal may be configured. Then, the one or more network devices may send the downlink positioning reference signal to the terminal device, and the terminal device measures the downlink positioning reference signal, and feeds back a measurement result of the downlink positioning reference signal to the LMF network element, to support positioning. For example, the downlink positioning reference signal may include but is not limited to a PRS, a cell common reference signal (common reference signal, CRS), or channel state information (channel state information, CSI)-RS. For example, the downlink positioning reference signal is a PRS. A PRS resource may be configured at a cell level, in other words, a PRS resource is configured for each cell. After the terminal device re-establishes a radio resource control (radio resource control, RRC) connection to a target cell, a base station of the target cell may configure a PRS resource for the target cell, and the terminal device obtains the PRS resource configured for the target cell, to receive and measure a PRS on the PRS resource. In addition, for one or more terminal devices (or one or more positioning assistance nodes) on a terminal device side, a resource used to send an uplink positioning reference signal may be configured. Then, the one or more terminal devices (or the one or more positioning assistance nodes) may send the uplink positioning reference signal to the network device, and the network device measures the uplink positioning reference signal, and feeds back a measurement result of the uplink positioning reference signal to the LMF network element, to support positioning.

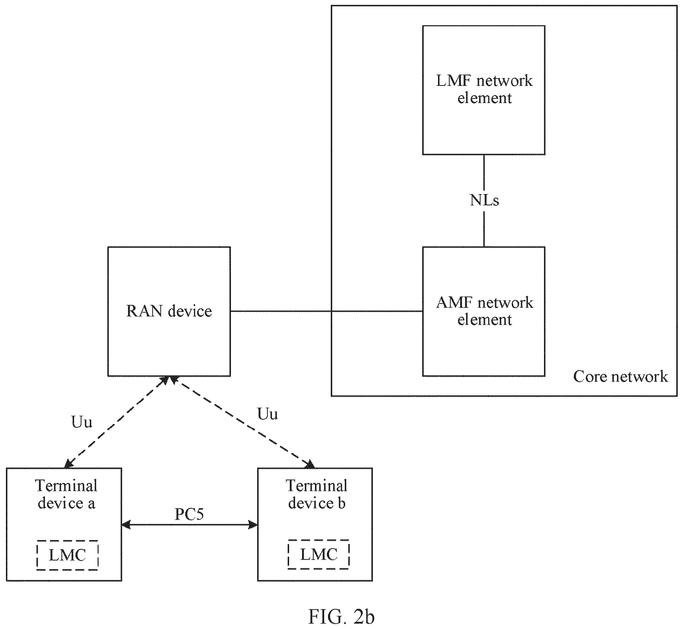

Based on the architecture of the communication system shown in FIG. 1, FIG. 2b exemplarily illustrates a network architecture of another communication system to which an embodiment of this application is applicable. As shown in FIG. 2b, the network architecture of the communication system is described by using a PC5 interface-based communication and positioning network architecture as an example. The network architecture of the communication system may include three parts: a RAN device, at least one terminal device (for example, a terminal device a and a terminal device b), and a core network. For specific functions of the devices/network elements such as the RAN device, the terminal device, an AMF network element, and an LMF network element, and a connection relationship between the devices/network elements, refer to the descriptions of related parts in FIG. 1 or FIG. 2a. Details are not described herein again.

In addition, a difference from FIG. 2a lies in that, an LMC is added to the terminal device included in the network architecture shown in FIG. 2b, and a specific deployment manner of the LMC is being disposed inside the terminal device, for example, disposed in the terminal device a, or disposed in the terminal device b. In this network architecture, the LMC serves as an internal function of the terminal device. Therefore, no new interface needs to be introduced. The LMC is a component/an application that is deployed on the terminal device and that has some functions of the LMF network element, and is configured to support a positioning service on a PC5 interface.

It should be noted that the positioning data transmission solution provided in embodiments of this application may be applied to various communication systems, for example, an LTE communication system, a 5G communication system such as NR, and a next generation communication system such as a 6G communication system. Certainly, the technical solutions provided in embodiments of this application may further be applied to another communication system, provided that the communication system has a positioning requirement for a terminal device. In addition, the communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the architecture of the communication network evolves and a new service scenario emerges.

The following describes in detail specific implementations of the positioning data transmission method in embodiments of this application based on the architectures of the communication systems shown in FIG. 1, FIG. 2a, and FIG. 2b.

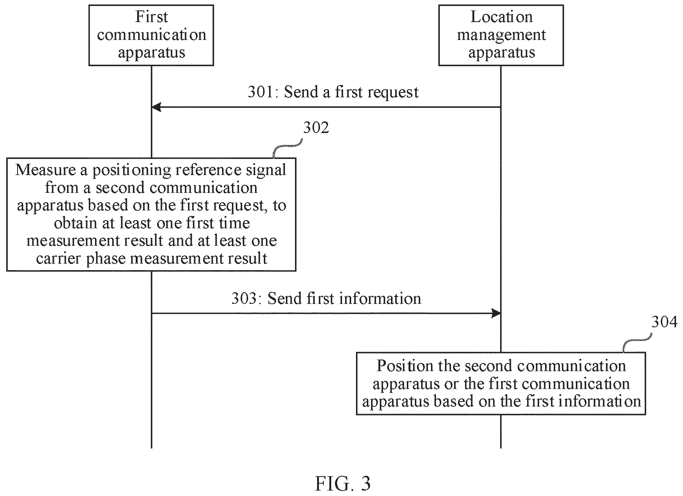

FIG. 3 exemplarily illustrates a schematic flowchart of a positioning data transmission method according to an embodiment of this application. The method is applicable to the architectures of the communication systems shown in FIG. 1, FIG. 2a, and FIG. 2b. Optionally, a first communication apparatus may be the RAN device shown in FIG. 1, FIG. 2a, and FIG. 2b, a component (for example, a chip or an integrated circuit) that can support the RAN device in implementing a function required by the method, or the like. A second communication apparatus may be the terminal device shown in FIG. 1, FIG. 2a, and FIG. 2b, a component (for example, a chip or an integrated circuit) that can support the terminal device in implementing a function required by the method, or the like. Alternatively, the second communication apparatus may be a positioning assistance node (for example, a PRU) not shown in FIG. 1, FIG. 2a, and FIG. 2b, a component (for example, a chip or an integrated circuit) that can support the positioning assistance node in implementing a function required by the method, or the like. A location management apparatus may be the LMF network element shown in FIG. 2a and FIG. 2b. For ease of describing the technical solutions provided in embodiments of this application, a procedure in which a positioning data transmission method is implemented through data exchange between the first communication apparatus, the second communication apparatus, and the location management apparatus is used as an example below for description. As shown in FIG. 3, the method includes the following steps.

Step 301: The location management apparatus sends a first request to the first communication apparatus. The first communication apparatus receives the first request.

Optionally, before the location management apparatus sends the first request to the first communication apparatus, the location management apparatus may send configuration information of a positioning reference signal (for example, an uplink positioning reference signal or a downlink positioning reference signal) to the first communication apparatus. For example, when the first communication apparatus is a network device, and the second communication apparatus is a terminal device, before sending the first request to the network device, the location management apparatus may first send configuration information of an uplink positioning reference signal to the network device participating in positioning. For another example, when the first communication apparatus is a terminal device, and the second communication apparatus is a network device, before sending the first request to the terminal device, the location management apparatus may first send configuration information of a downlink positioning reference signal to the terminal device. The configuration information of the positioning reference signal is used to assist the first communication apparatus in measuring the positioning reference signal. For example, the configuration information of the positioning reference signal may include but is not limited to a time domain resource, a frequency domain resource, a signal transmission period, or identification information of the positioning reference signal.

The first request is used to request the first communication apparatus to report a measurement result of the positioning reference signal. For example, the measurement result may include at least one of the following: a time measurement result or a carrier phase measurement result. Optionally, the time measurement result may be associated with the carrier phase measurement result.

In this embodiment of this application, the time measurement result may be obtained by the first communication apparatus based on at least one sample. In this way, the time measurement result that can be reported to the location management apparatus is determined based on the at least one sample, so that the reported time measurement result can be more accurate and more practical. For example, the first communication apparatus obtains a time measurement result after measuring a positioning reference signal corresponding to at least one sample. It may be understood that the time measurement result may correspond to a measurement timestamp. Optionally, the time measurement result may alternatively be determined in another manner (for example, the time measurement result is obtained through measurement in another measurement manner based on at least one sample). This is not limited in this embodiment of this application.

For example, the time measurement result may include but is not limited to: a relative time of arrival (Relative time of arrival, RTOA), a reference signal time difference (Reference signal time difference, RSTD), or a receive-transmit time difference (Rx-Tx Time Difference). The carrier phase measurement result may include but is not limited to: a reference signal carrier phase (Reference Signal Carrier Phase, RSCP), a reference signal carrier phase difference (Reference Signal Carrier Phase Difference, RSCPD), carrier phases (Carrier Phases) of a plurality of subbands, a carrier phase difference (Carrier Phase Difference) in a plurality of subbands, carrier phases of a plurality of frequencies, or a carrier phase difference in a plurality of frequencies.

Optionally, the first request may include measurement time information for measuring the positioning reference signal. For example, the measurement time information may include but is not limited to a measurement time window or a measurement timestamp. Optionally, the measurement time window includes a plurality of measurement timestamps (which may be also referred to as measurement moments). For example, when the first communication apparatus is a terminal device and a positioning assistance node, measurement time information for the terminal device may be the same as measurement time information for the positioning assistance node.

When the first request includes the measurement time information for measuring the positioning reference signal, the first communication apparatus may measure the positioning reference signal at corresponding measurement time information based on the measurement time information, and report a corresponding carrier phase measurement result to the location management apparatus. In this way, it can be ensured that the location management apparatus performs differentiation by using carrier phase measurement results measured by one or more first communication apparatuses at a same measurement timestamp, a same measurement time point, or a same measurement moment, to eliminate a non-ideal factor such as a random initial phase error, so as to improve carrier phase positioning precision.

Optionally, the first request may further include indication information. The indication information indicates that the number of reported time measurement results is the same as the number of reported carrier phase measurement results, or the indication information indicates that the number of reported time measurement results is different from the number of reported carrier phase measurement results. For example, the reported quantity may be the number of samples (for example, reported samples or instances) of the time measurement result or the carrier phase measurement result, or the reported quantity may be the number of measurement times (for example, measured samples or instances).

When the first request includes the indication information, the first communication apparatus may learn of a manner of reporting the measurement result to the location management apparatus. In an example, when the indication information indicates that the quantity of reported time measurement results is the same as the quantity of reported carrier phase measurement results, the first communication apparatus may report m time measurement results and m carrier phase measurement results to the location management apparatus, where m is an integer greater than or equal to 1. In another example, when the indication information indicates that the quantity of reported time measurement results is different from the quantity of reported carrier phase measurement results, the first communication apparatus may report p time measurement results and q carrier phase measurement results to the location management apparatus, where p is greater than q, or p is less than q, and both p and q are integers greater than or equal to 1. For example, when p is 1 and q is 2, the first communication apparatus may report one time measurement result and two carrier phase measurement results to the location management apparatus, where the time measurement result and the two carrier phase measurement results are associated and reported together. For another example, when p is 2 and q is 1, the first communication apparatus may report two time measurement results and one carrier phase measurement result to the location management apparatus, where the two time measurement results and the carrier phase measurement result are associated and reported together. For still another example, when p is 2 and q is 3, the first communication apparatus may report two time measurement results and three carrier phase measurement results to the location management apparatus, where the two time measurement results and the three carrier phase measurement results are associated and reported together.

Step 302: The first communication apparatus measures the positioning reference signal from the second communication apparatus based on the first request, to obtain at least one first time measurement result and at least one carrier phase measurement result;

For example, each first time measurement result included in the at least one first time measurement result corresponds to one measurement timestamp, and each carrier phase measurement result included in the at least one carrier phase measurement result corresponds to one measurement timestamp.

In a possible implementation, when there is one first time measurement result and there are one or more carrier phase measurement results, the first time measurement result may be associated with the carrier phase measurement result, or the first time measurement result may be associated with a plurality of carrier phase measurement results. In another possible implementation, when there are a plurality of first time measurement results and there is one carrier phase measurement result, the plurality of first time measurement results may be associated with the carrier phase measurement result. In still another possible implementation, when there are a plurality of first time measurement results and there are a plurality of carrier phase measurement results, the plurality of first time measurement results may be associated with a part or all of the plurality of carrier phase measurement results.

Optionally, in an example, when the first communication apparatus is a network device, the second communication apparatus may be a terminal device, a positioning assistance node, or a terminal device and a positioning assistance node. In a possible implementation, when the first communication apparatus is a network device and the second communication apparatus is a terminal device, the network device may measure an uplink positioning reference signal from the terminal device based on the first request from the location management apparatus (for example, the LMF network element). In this case, an obtained first time measurement result includes at least one of the following: an RTOA, a network device (for example, base station/TRP) receive-transmit time difference, or the like; and an obtained carrier phase measurement result includes at least one of the following: an RSCP, an RSCPD, carrier phases of a plurality of subbands, a carrier phase difference in a plurality of subbands, carrier phases of a plurality of frequencies, a carrier phase difference in a plurality of frequencies, or the like. Each of the following: the carrier phases of the plurality of subbands, the carrier phase difference in the plurality of subbands, the carrier phases of the plurality of frequencies, and the carrier phase difference in the plurality of frequencies may indicate one or more carrier phase measurement quantities.

In another possible implementation, when the first communication apparatus is a network device and the second communication apparatus is a positioning assistance node, the network device may measure an uplink positioning reference signal from the positioning assistance node based on the first request from the location management apparatus (for example, the LMF network element). In this case, an obtained first time measurement result includes at least one of the following: an RTOA, a receive-transmit time difference on a network device side (for example, a base station/TRP), or the like; and an obtained carrier phase measurement result includes at least one of the following: an RSCP, an RSCPD, carrier phases of a plurality of subbands, a carrier phase difference in a plurality of subbands, carrier phases of a plurality of frequencies, a carrier phase difference in a plurality of frequencies, or the like.

In still another possible implementation, when the first communication apparatus is a network device and the second communication apparatus is a terminal device and a positioning assistance node, the network device may measure an uplink positioning reference signal from the terminal device based on the first request from the location management apparatus (for example, the LMF network element). In this case, a first time measurement result that may be obtained includes at least one of the following: an RTOA, a network device (for example, base station/TRP) receive-transmit time difference, or the like; or a carrier phase measurement result that may be obtained includes at least one of the following: an RSCP, an RSCPD, carrier phases of a plurality of subbands, a carrier phase difference in a plurality of subbands, carrier phases of a plurality of frequencies, a carrier phase difference in a plurality of frequencies, or the like. In addition, the network device may also measure an uplink positioning reference signal from the positioning assistance node based on the first request from the location management apparatus (for example, the LMF network element). In this case, a first time measurement result that may be obtained includes at least one of the following: an RTOA, a receive-transmit time difference on a network device side (for example, a base station/TRP), or the like; or a carrier phase measurement result that may be obtained includes at least one of the following: an RSCP, an RSCPD, carrier phases of a plurality of subbands, a carrier phase difference in a plurality of subbands, carrier phases of a plurality of frequencies, a carrier phase difference in a plurality of frequencies, or the like.

In another example, when the first communication apparatus is a terminal device, a positioning assistance node, or a terminal device and a positioning assistance node, the second communication apparatus may be a network device. In a possible implementation, when the first communication apparatus is a terminal device and the second communication apparatus is a network device, the terminal device may measure a downlink positioning reference signal from the network device based on the first request from the location management apparatus (for example, the LMF network element). In this case, a first time measurement result that may be obtained includes at least one of the following: an RSTD, a terminal device receive-transmit time difference, or the like; or a carrier phase measurement result that may be obtained includes at least one of the following: an RSCP, an RSCPD, carrier phases of a plurality of subbands, a carrier phase difference in a plurality of subbands, carrier phases of a plurality of frequencies, a carrier phase difference in a plurality of frequencies, or the like.

In another possible implementation, when the first communication apparatus is a positioning assistance node and the second communication apparatus is a network device, the positioning assistance node may measure a downlink positioning reference signal from the network device based on the first request from the location management apparatus (for example, the LMF network element). In this case, a first time measurement result that may be obtained includes at least one of the following: an RSTD, a terminal device receive-transmit time difference, or the like; or a carrier phase measurement result that may be obtained includes at least one of the following: an RSCP, an RSCPD, carrier phases of a plurality of subbands, a carrier phase difference in a plurality of subbands, carrier phases of a plurality of frequencies, a carrier phase difference in a plurality of frequencies, or the like.

In still another possible implementation, when the first communication apparatus is a terminal device and a positioning assistance node, and the second communication apparatus is a network device, the terminal device may measure a downlink positioning reference signal from the network device based on the first request from the location management apparatus (for example, the LMF network element). In this case, a first time measurement result that may be obtained includes at least one of the following: an RSTD, a terminal device receive-transmit time difference, or the like; or a carrier phase measurement result that may be obtained includes at least one of the following: an RSCP, an RSCPD, carrier phases of a plurality of subbands, a carrier phase difference in a plurality of subbands, carrier phases of a plurality of frequencies, a carrier phase difference in a plurality of frequencies, or the like. In addition, the positioning assistance node may also measure a downlink positioning reference signal from the network device based on the first request from the location management apparatus (for example, the LMF network element). In this case, a first time measurement result that may be obtained includes at least one of the following: an RSTD, a positioning assistance node receive-transmit time difference, or the like; or a carrier phase measurement result that may be obtained includes at least one of the following: an RSCP, an RSCPD, carrier phases of a plurality of subbands, a carrier phase difference in a plurality of subbands, carrier phases of a plurality of frequencies, a carrier phase difference in a plurality of frequencies, or the like.

For example, an example in which the first communication apparatus is a network device (for example, a network device A), the second communication apparatus is a terminal device (for example, a terminal device A), and the positioning reference signal is an uplink positioning reference signal is used below. An association relationship between the at least one first time measurement result and the at least one carrier phase measurement result may be described by using, but not limited to, the following several possible cases. When the network device A (for example, a base station) receives the first request from the location management apparatus (for example, the LMF network element), the network device A may measure one or more uplink positioning reference signals from the terminal device A, to obtain at least one first time measurement result and at least one carrier phase measurement result. Optionally, alternatively, a plurality of network devices (for example, the network device A and a network device B) may simultaneously measure the uplink positioning reference signal from the terminal device A.

Case 1: When the network device A measures one uplink positioning reference signal from the terminal device A to obtain one first time measurement result and one carrier phase measurement result, the first time measurement result is associated with the carrier phase measurement result.

For example, the first time measurement result is an RTOA, and the carrier phase measurement result is an RSCP. When the network device A measures an uplink positioning reference signal from the terminal device A at a measurement timestamp to obtain one RTOA and one RSCP that correspond to the measurement timestamp, the RTOA and the RSCP that correspond to the measurement timestamp are associated.

Case 2: When the network device A measures a plurality of uplink positioning reference signals from the terminal device A to obtain a plurality of first time measurement results and a plurality of carrier phase measurement results, the plurality of first time measurement results are associated with the plurality of carrier phase measurement results in one-to-one correspondence.

For example, the first time measurement result is an RTOA, and the carrier phase measurement result is an RSCP. When the network device A measures the respective uplink positioning reference signals from the terminal device A at a plurality of measurement timestamps to obtain one RTOA and one RSCP that correspond to each measurement timestamp, one RTOA corresponding to each measurement timestamp is associated with one RSCP corresponding to the measurement timestamp.

For another example, the first time measurement result is an RTOA and a network device (for example, base station/TRP) receive-transmit time difference, and the carrier phase measurement result is an RSCP. When the network device A measures the respective uplink positioning reference signals from the terminal device A at a plurality of measurement timestamps to obtain one RTOA, one network device receive-transmit time difference, and one RSCP that correspond to each measurement timestamp, one RTOA and one network device receive-transmit time difference that correspond to each measurement timestamp are associated with one RSCP corresponding to the measurement timestamp.

For still another example, the first time measurement result is a network device (for example, base station/TRP) receive-transmit time difference, and the carrier phase measurement result is carrier phases of a plurality of subbands. When the network device A measures the respective uplink positioning reference signals from the terminal device A at a plurality of measurement timestamps to obtain one network device receive-transmit time difference and carrier phases of a plurality of different subbands that correspond to each measurement timestamp, one network device receive-transmit time difference corresponding to each measurement timestamp is associated with carrier phases of a plurality of different subbands corresponding to the measurement timestamp.

For still another example, the first time measurement result is an RTOA, and the carrier phase measurement result is carrier phases of a plurality of subbands. When the network device A measures the respective uplink positioning reference signals from the terminal device A at a plurality of measurement timestamps to obtain one RTOA and carrier phases of a plurality of different subbands that correspond to each measurement timestamp, one RTOA corresponding to each measurement timestamp is associated with carrier phases of a plurality of different subbands corresponding to the measurement timestamp.

For still another example, the first time measurement result is an RTOA and a network device (for example, base station/TRP) receive-transmit time difference, and the carrier phase measurement result is carrier phases of a plurality of subbands. When the network device A measures the respective uplink positioning reference signals from the terminal device A at a plurality of measurement timestamps to obtain one RTOA, one network device receive-transmit time difference, and carrier phases of a plurality of different subbands that correspond to each measurement timestamp, one RTOA and one network device receive-transmit time difference that correspond to each measurement timestamp are associated with carrier phases of a plurality of different subbands corresponding to the measurement timestamp.

Case 3: When the network device A measures one uplink positioning reference signal from the terminal device A to obtain a plurality of first time measurement results and one carrier phase measurement result, the plurality of first time measurement results are associated with the carrier phase measurement result.

For example, the first time measurement result is an RTOA and a network device (for example, base station/TRP) receive-transmit time difference, and the carrier phase measurement result is an RSCP. When the network device A measures an uplink positioning reference signal from the terminal device A at a measurement timestamp to obtain one RTOA, one network device receive-transmit time difference, and one RSCP that correspond to the measurement timestamp, the RTOA and the network device receive-transmit time difference, and the RSCP that correspond to the measurement timestamp are associated.

Case 4: When the network device A measures one uplink positioning reference signal from the terminal device A to obtain one first time measurement result and a plurality of carrier phase measurement results, the first time measurement result is associated with the plurality of carrier phase measurement results.

For example, the first time measurement result is an RTOA, and the carrier phase measurement result is carrier phases of a plurality of subbands. When the network device A measures an uplink positioning reference signal from the terminal device A at a measurement timestamp to obtain one RTOA and carrier phases of a plurality of different subbands that correspond to the measurement timestamp, the RTOA and the carrier phases of the plurality of different subbands that correspond to the measurement timestamp are associated.

For another example, the first time measurement result is an RTOA, and the carrier phase measurement result is carrier phases of a plurality of frequencies. When the network device A measures an uplink positioning reference signal from the terminal device A at a measurement timestamp to obtain one RTOA and carrier phases of a plurality of different frequencies that correspond to the measurement timestamp, the RTOA and the carrier phases of the plurality of different frequencies that correspond to the measurement timestamp are associated.

For another example, the first time measurement result is an RTOA, and the carrier phase measurement result is an RSCP and an RSCPD. When the network device A measures an uplink positioning reference signal from the terminal device A at a measurement timestamp to obtain one RTOA, one RSCP, and one RSCPD that correspond to the measurement timestamp, the RTOA, the RSCP, and the RSCPD that correspond to the measurement timestamp are associated.

For another example, the first time measurement result is a network device (for example, base station/TRP) receive-transmit time difference, and the carrier phase measurement result is an RSCP and an RSCPD. When the network device A measures an uplink positioning reference signal from the terminal device A at a measurement timestamp to obtain one network device receive-transmit time difference, one RSCP, and one RSCPD that correspond to the measurement timestamp, the network device receive-transmit time difference, the RSCP, and the RSCPD that correspond to the measurement timestamp are associated.

Case 5: When the network device A measures a plurality of uplink positioning reference signals from the terminal device A to obtain one or more first time measurement results and a plurality of carrier phase measurement results, the one or more first time measurement results are associated with the plurality of carrier phase measurement results.

For example, the first time measurement result is an RTOA, and the carrier phase measurement result is an RSCP and an RSCPD. When the network device A measures the respective uplink positioning reference signals from the terminal device A at a plurality of measurement timestamps to obtain one RSCP and one RSCPD that correspond to each measurement timestamp and obtain one RTOA corresponding to a measurement timestamp, the RTOA corresponding to the measurement timestamp may be associated with one RSCP and one RSCPD that correspond to the measurement timestamp, or the RTOA may be associated with the RSCP and the RSCPD that correspond to each of the plurality of measurement timestamps.

For another example, the first time measurement result is an RTOA, and the carrier phase measurement result is an RSCP and an RSCPD. When the network device A measures the respective uplink positioning reference signals from the terminal device A at a plurality of measurement timestamps to obtain one RSCP and one RSCPD that correspond to each measurement timestamp and obtain one RTOA corresponding to each of several measurement timestamps, the RTOA corresponding to each of the several measurement timestamps may be associated with one RSCP and one RSCPD that correspond to the measurement timestamp, or the several RTOAs may be associated with the RSCP and the RSCPD that correspond to each of the plurality of measurement timestamps.

For still another example, the first time measurement result is a network device (for example, base station/TRP) receive-transmit time difference, and the carrier phase measurement result is an RSCP and an RSCPD. When the network device A measures the respective uplink positioning reference signals from the terminal device A at a plurality of measurement timestamps to obtain one RSCP and one RSCPD that correspond to each measurement timestamp and obtain one network device receive-transmit time difference corresponding to a measurement timestamp, the network device receive-transmit time difference corresponding to the measurement timestamp may be associated with one RSCP and one RSCPD that correspond to the measurement timestamp, or the network device receive-transmit time difference may be associated with the RSCP and the RSCPD that correspond to each of the plurality of measurement timestamps.

For still another example, the first time measurement result is an RTOA, and the carrier phase measurement result is carrier phases of a plurality of frequencies. When the network device A measures the respective uplink positioning reference signals from the terminal device A at a plurality of measurement timestamps to obtain carrier phases of a plurality of different frequencies that correspond to each measurement timestamp and obtain one RTOA corresponding to a measurement timestamp, the RTOA corresponding to the measurement timestamp may be associated with carrier phases of a plurality of different frequencies that correspond to the measurement timestamp, or the RTOA may be associated with the carrier phases of the plurality of different frequencies that correspond to each of the plurality of measurement timestamps.

For still another example, the first time measurement result is an RTOA and a network device (for example, base station/TRP) receive-transmit time difference, and the carrier phase measurement result is an RSCP and an RSCPD. When the network device A measures the respective uplink positioning reference signals from the terminal device A at a plurality of measurement timestamps to obtain one RSCP and one RSCPD that correspond to each measurement timestamp and obtain one RTOA and one network device receive-transmit time difference that correspond to a measurement timestamp, the RTOA and the network device receive-transmit time difference that correspond to the measurement timestamp may be associated with one RSCP and one RSCPD that correspond to the measurement timestamp, or the RTOA and the network device receive-transmit time difference may be associated with the RSCP and the RSCPD that correspond to each of the plurality of measurement timestamps.

Case 6: When the network device A measures a plurality of uplink positioning reference signals from the terminal device A to obtain a plurality of first time measurement results and one carrier phase measurement result, the plurality of first time measurement results are associated with the carrier phase measurement result.

For example, the first time measurement result is an RTOA, and the carrier phase measurement result is an RSCP. When the network device A measures the respective uplink positioning reference signals from the terminal device A at a plurality of measurement timestamps to obtain one RTOA corresponding to each measurement timestamp and obtain one RSCP corresponding to a measurement timestamp, the RTOA corresponding to each of the plurality of measurement timestamps may be associated with the RSCP.

For another example, the first time measurement result is a network device (for example, base station/TRP) receive-transmit time difference, and the carrier phase measurement result is an RSCP. When the network device A measures the respective uplink positioning reference signals from the terminal device A at a plurality of measurement timestamps to obtain one network device receive-transmit time difference corresponding to each measurement timestamp and obtain one RSCP corresponding to a measurement timestamp, the network device receive-transmit time difference corresponding to each of the plurality of measurement timestamps may be associated with the RSCP.

For still another example, the first time measurement result is an RTOA, and the carrier phase measurement result is carrier phases of a plurality of frequencies. When the network device A measures the respective uplink positioning reference signals from the terminal device A at a plurality of measurement timestamps to obtain one RTOA corresponding to each measurement timestamp and obtain carrier phases of a plurality of frequencies that correspond to a measurement timestamp, the RTOA corresponding to each of the plurality of measurement timestamps may be associated with the carrier phases of the plurality of frequencies.

For still another example, the first time measurement result is an RTOA and a network device (for example, base station/TRP) receive-transmit time difference, and the carrier phase measurement result is an RSCP. When the network device A measures the respective uplink positioning reference signals from the terminal device A at a plurality of measurement timestamps to obtain one RTOA and one network device receive-transmit time difference that correspond to each measurement timestamp and obtain one RSCP corresponding to a measurement timestamp, the RTOA and the network device receive-transmit time difference that correspond to each of the plurality of measurement timestamps may be associated with the RSCP.

Step 303: The first communication apparatus sends first information to the location management apparatus. The location management apparatus receives the first information.

Optionally, in an example, the first information may include one or more first time measurement results and one or more carrier phase measurement results associated with the one or more first time measurement results. Optionally, the one or more first time measurement results and the one or more carrier phase measurement results may be sent via same reporting information (for example, the same first information) or a same reporting message (for example, the first information is included in the same reporting message), or the one or more first time measurement results and the one or more carrier phase measurement results are sent in a same reporting period, in other words, the first information may be sent in the same reporting period.

In another example, the first information may include one or more second time measurement results and one or more carrier phase measurement results associated with the one or more second time measurement results. Optionally, the one or more first time measurement results and the one or more carrier phase measurement results may be sent via same reporting information (for example, the same first information) or a same reporting message (for example, the first information is included in the same reporting message), or the one or more first time measurement results and the one or more carrier phase measurement results are sent in a same reporting period, in other words, the first information may be sent in the same reporting period. For example, the positioning reference signal is an uplink positioning reference signal, the first communication apparatus is a network device, and the second communication apparatus is a terminal device. The first information for the terminal device may be carried in an NRPPa message, or may be carried in other information, another message, or the like.

The second time measurement result is determined by the first communication apparatus based on the one or more first time measurement results, and the second time measurement result may correspond to one measurement timestamp (for example, a first measurement timestamp).

In an example, when there is one first time measurement result, the first time measurement result may be used as the second time measurement result. In this case, a first measurement timestamp corresponding to the second time measurement result is a measurement timestamp corresponding to the first time measurement result.

In another example, when there are a plurality of first time measurement results, the first communication apparatus may smooth the plurality of first time measurement results, to obtain the second time measurement result. In this case, the first communication apparatus may select any second measurement timestamp from one or more second measurement timestamps respectively corresponding to one or more carrier phase measurement results as the first measurement timestamp corresponding to the second time measurement result. For example, the first communication apparatus selects a second measurement timestamp corresponding to a carrier phase measurement result obtained through last measurement as the first measurement timestamp corresponding to the second time measurement result.

In still another example, when there are a plurality of first time measurement results, the first communication apparatus may select, from the plurality of first time measurement results, a first time measurement result corresponding to a largest measurement timestamp as the second time measurement result. In this case, the first measurement timestamp corresponding to the second time measurement result is the largest measurement timestamp.

In still another example, when there are a plurality of first time measurement results, the first communication apparatus may select any one first time measurement result from the plurality of first time measurement results as the second time measurement result. In this case, the first measurement timestamp corresponding to the second time measurement result is a measurement timestamp corresponding to the first time measurement result.

In still another example, when there are a plurality of first time measurement results, the first communication apparatus may sort measurement timestamps corresponding to the plurality of first time measurement results in descending order, to obtain a plurality of sorted first time measurement results. Then, the first communication apparatus may select any one first time measurement result in first n first time measurement results in the plurality of sorted first time measurement results as the second time measurement result. In this case, the first measurement timestamp corresponding to the second time measurement result is a measurement timestamp corresponding to the first time measurement result.

In still another example, when there are a plurality of first time measurement results, the first communication apparatus may select at least one first time measurement result that satisfies a specified condition from the plurality of first time measurement results, and may select any one first time measurement result from the at least one first time measurement result that satisfies the specified condition as the second time measurement result. In this case, the first measurement timestamp corresponding to the second time measurement result is a measurement timestamp corresponding to the first time measurement result. Optionally, the specified condition includes: a value corresponding to the first time measurement result is less than or equal to a specified threshold.

Optionally, in a possible implementation, when the first communication apparatus may obtain one or more first time measurement results and one or more carrier phase measurement results by measuring the positioning reference signal, based on the indication information included in the first request or based on an actual requirement of the first communication apparatus, the first communication apparatus may associate the one or more first time measurement results with the one or more carrier phase measurement results, and report them to the location management apparatus. In this case, the first information sent by the first communication apparatus to the location management apparatus includes the first time measurement result and the one or more carrier phase measurement results associated with the first time measurement result.

For example, an example in which the first communication apparatus is a network device (for example, a network device A), the second communication apparatus is a terminal device (for example, a terminal device A), and the positioning reference signal is an uplink positioning reference signal is used below. An implementation process in which the first communication apparatus sends the first information to the location management apparatus may be described by using, but not limited to, the following several possible examples. When the network device A may measure one or more uplink positioning reference signals from the terminal device A to obtain at least one first time measurement result and at least one carrier phase measurement result, the network device A may send the first information to the location management apparatus. Optionally, a plurality of network devices (for example, the network device A and a network device B) may separately send the first information to the location management apparatus.

Example 1: For example, the first time measurement result is an RTOA, and the carrier phase measurement result is an RSCP. When the network device A measures one received positioning reference signal at a measurement timestamp to obtain one RTOA and one RSCP, based on the indication information included in the first request or based on an actual requirement of the first communication apparatus, the first communication apparatus may associate the RTOA with the RSCP, and report them to the location management apparatus. In this case, the first information sent by the network device A to the location management apparatus includes the RTOA and the RSCP associated with the RTOA.

Example 2: For example, the first time measurement result is an RTOA and a network device (for example, base station/TRP) receive-transmit time difference, and the carrier phase measurement result is an RSCP. When the network device A measures one received positioning reference signal at a measurement timestamp to obtain one RTOA, one network device receive-transmit time difference, and one RSCP, based on the indication information included in the first request or based on an actual requirement of the first communication apparatus, the first communication apparatus may associate the RTOA and the network device receive-transmit time difference with the RSCP, and report them to the location management apparatus. In this case, the first information sent by the network device A to the location management apparatus includes the RTOA and the network device receive-transmit time difference, and the RSCP associated with the RTOA and the network device receive-transmit time difference.

Example 3: For example, the first time measurement result is an RTOA and a network device (for example, base station/TRP) receive-transmit time difference, and the carrier phase measurement result is an RSCP and an RSCPD. When the network device A measures one received positioning reference signal at a measurement timestamp to obtain one RTOA, one network device receive-transmit time difference, one RSCP, and one RSCPD, based on the indication information included in the first request or based on an actual requirement of the first communication apparatus, the first communication apparatus may associate the RTOA and the network device receive-transmit time difference with the RSCP and the RSCPD, and report them to the location management apparatus. In this case, the first information sent by the network device A to the location management apparatus includes the RTOA and the network device receive-transmit time difference, and the RSCP and the RSCPD that are associated with the RTOA and the network device receive-transmit time difference.

Example 4: For example, the first time measurement result is an RTOA, and the carrier phase measurement result is carrier phases of a plurality of subbands. When the network device A measures one received positioning reference signal at a measurement timestamp to obtain one RTOA and carrier phases of a plurality of different subbands, based on the indication information included in the first request or based on an actual requirement of the network device A, the network device A may associate the RTOA with the carrier phases of the plurality of different subbands, and report them to the location management apparatus. In this case, the first information sent by the network device A to the location management apparatus includes the RTOA and the carrier phases of the plurality of different subbands associated with the RTOA.

Example 5: For example, the first time measurement result is an RTOA, and the carrier phase measurement result is an RSCP and an RSCPD. When the network device A measures one received positioning reference signal at a measurement timestamp to obtain one RTOA, one RSCP, and one RSCPD, based on the indication information included in the first request or based on an actual requirement of the network device A, the network device A may associate the RTOA with the RSCP and the RSCPD, and report them to the location management apparatus. In this case, the first information sent by the network device A to the location management apparatus includes the RTOA, and the RSCP and the RSCPD that are associated with the RTOA.

Example 6: For example, the first time measurement result is an RTOA and a network device (for example, base station/TRP) receive-transmit time difference, and the carrier phase measurement result is carrier phases of a plurality of subbands and an RSCPD. When the network device A measures one received positioning reference signal at a measurement timestamp to obtain one RTOA, one network device receive-transmit time difference, carrier phases of a plurality of different subbands, and one RSCPD, based on the indication information included in the first request or an actual requirement of the network device A, the network device A may associate the RTOA and the network device receive-transmit time difference with the carrier phases of the plurality of different subbands and the RSCPD, and report them to the location management apparatus. In this case, the first information sent by the network device A to the location management apparatus includes the RTOA and the network device receive-transmit time difference, and the carrier phases of the plurality of different subbands and the RSCPD that are associated with the RTOA and the network device receive-transmit time difference.

Example 7: For example, the first time measurement result is an RTOA, and the carrier phase measurement result is an RSCP. When the network device A measures respective received positioning reference signals at a plurality of measurement timestamps to obtain one RTOA corresponding to each measurement timestamp and one RSCP corresponding to the measurement timestamp, in an example, based on the indication information included in the first request or based on an actual requirement of the network device A, the network device A may associate, in one-to-one correspondence, the RTOAs respectively corresponding to the plurality of measurement timestamps with the RSCPs respectively corresponding to the plurality of measurement timestamps, and report them to the location management apparatus, and in this case, the first information sent by the network device A to the location management apparatus includes the plurality of RTOAs and one RSCP associated with each of the plurality of RTOAs; in another example, the network device A may choose, based on the indication information included in the first request or based on an actual requirement of the network device A, to report only one RTOA (or several RTOAs) in the RTOAs respectively corresponding to the plurality of measurement timestamps, and may associate the RTOA (or the several RTOAs) with the RSCPs respectively corresponding to the plurality of measurement timestamps, and report them to the location management apparatus, and in this case, the first information sent by the network device A to the location management apparatus includes the RTOA (or the several RTOAs) and the plurality of RSCPs associated with the RTOA (or the several RTOAs); and in still another example, the network device A may choose, based on the indication information included in the first request or based on an actual requirement of the network device A, to report only one RSCP (or several RSCPs) in the RSCPs respectively corresponding to the plurality of measurement timestamps, and associate the RSCP (or the several RSCPs) with the RTOAs respectively corresponding to the plurality of measurement timestamps, and report them to the location management apparatus, and in this case, the first information sent by the network device A to the location management apparatus includes the RSCP (or the several RSCPs), and the plurality of RTOAs associated with the RSCP (or the several RSCPs).

Example 8: For example, the first time measurement result is an RTOA, and the carrier phase measurement result is an RSCP and an RSCPD. When the network device A measures respective received positioning reference signals at a plurality of measurement timestamps to obtain one RTOA corresponding to each measurement timestamp, and one RSCP and one RSCPD that correspond to the measurement timestamp, in an example, based on the indication information included in the first request or based on an actual requirement of the network device A, the network device A may associate, in one-to-one correspondence, the RTOAs respectively corresponding to the plurality of measurement timestamps with the RSCPs and the RSCPDs respectively corresponding to the plurality of measurement timestamps, and report them to the location management apparatus, and in this case, the first information sent by the network device A to the location management apparatus includes the plurality of RTOAs and one RSCP and one RSCPD that are associated with each of the plurality of RTOAs; in another example, the network device A may choose, based on the indication information included in the first request or based on an actual requirement of the network device A, to report only one RTOA (or several RTOAs) in the RTOAs respectively corresponding to the plurality of measurement timestamps, and may associate the RTOA (or the several RTOAs) with the RSCPs and the RSCPDs that respectively correspond to the plurality of measurement timestamps, and report them to the location management apparatus, and in this case, the first information sent by the network device A to the location management apparatus includes the RTOA (or the several RTOAs), and the plurality of RSCPs and the plurality of RSCPDs that are associated with the RTOA (or the several RTOAs); and in still another example, the network device A may choose, based on the indication information included in the first request or based on an actual requirement of the network device A, to report only one of the RSCPs and the RSCPDs. For example, the network device A may choose to report, to the location management apparatus, the RSCPs respectively corresponding to the plurality of measurement timestamps and the RTOAs respectively corresponding to the plurality of measurement timestamps, and in this case, the first information sent by the network device A to the location management apparatus includes the RSCPs respectively corresponding to the plurality of measurement timestamps and the plurality of RTOAs associated with the RSCPs respectively corresponding to the plurality of measurement timestamps.

Example 9: For example, the first time measurement result is an RTOA and a network device (for example, base station/TRP) receive-transmit time difference, and the carrier phase measurement result is an RSCP. When the network device A measures respective received positioning reference signal at a plurality of measurement timestamps to obtain one RTOA and one network device receive-transmit time difference that correspond to each measurement timestamp and one RSCP corresponding to the measurement timestamp, in an example, based on the indication information included in the first request or based on an actual requirement of the network device A, the network device A may associate, in one-to-one correspondence, the RTOAs and the network device receive-transmit time differences that respectively correspond to the plurality of measurement timestamps with the RSCPs respectively corresponding to the plurality of measurement timestamps, and report them to the location management apparatus, and in this case, the first information sent by the network device A to the location management apparatus includes the plurality of RTOAs and the plurality of network device receive-transmit time differences, and one RSCP associated with each of the plurality of RTOAs and the plurality of network device receive-transmit time differences; in another example, the network device A may choose, based on the indication information included in the first request or based on an actual requirement of the network device A, to report only one of the RTOAs and the network device receive-transmit time differences. For example, the network device A may choose to associate the RTOAs respectively corresponding to the plurality of measurement timestamps with the RSCPs respectively corresponding to the plurality of measurement timestamps, and report them to the location management apparatus, and in this case, the first information sent by the network device A to the location management apparatus includes the RTOAs respectively corresponding to the plurality of measurement timestamps and the plurality of RSCPs associated with the RTOAs respectively corresponding to the plurality of measurement timestamps; and in still another example, the network device A may select, based on the indication information included in the first request or based on an actual requirement of the network device A, one RSCP (or several RSCPs) from the RSCPs respectively corresponding to the plurality of measurement timestamps, and may associate the RSCP (or the several RSCPs) with the RTOAs and the network device receive-transmit time differences that respectively correspond to the plurality of measurement timestamps, and report them to the location management apparatus, and in this case, the first information sent by the network device A to the location management apparatus includes the plurality of RTOAs and the plurality of network device receive-transmit time differences, and the RSCP (or the several RSCPs) associated with the plurality of RTOAs and the plurality of network device receive-transmit time differences.

Example 10: For example, the first time measurement result is an RTOA and a network device (for example, base station/TRP) receive-transmit time difference, and the carrier phase measurement result is an RSCP and an RSCPD. When the network device A measures respective received positioning reference signal at a plurality of measurement timestamps to obtain one RTOA and one network device receive-transmit time difference that correspond to each measurement timestamp, and one RSCP and one RSCPD that correspond to the measurement timestamp, in an example, based on the indication information included in the first request or based on an actual requirement of the network device A, the network device A may associate, in one-to-one correspondence, the RTOAs and the network device receive-transmit time differences that respectively correspond to the plurality of measurement timestamps with the RSCPs and the RSCPDs that respectively correspond to the plurality of measurement timestamps, and report them to the location management apparatus, and in this case, the first information sent by the network device A to the location management apparatus includes the plurality of RTOAs and the plurality of network device receive-transmit time differences, and one RSCP and one RSCPD that are associated with each of the plurality of RTOAs and each of the plurality of network device receive-transmit time differences; in another example, the network device A may choose, based on the indication information included in the first request or based on an actual requirement of the network device A, to report only one of the RTOAs and the network device receive-transmit time differences. For example, the network device A may choose to associate the RTOAs respectively corresponding to the plurality of measurement timestamps with the RSCPs and the RSCPDs that respectively correspond to the plurality of measurement timestamps, and report them to the location management apparatus, and in this case, the first information sent by the network device A to the location management apparatus includes the RTOAs respectively corresponding to the plurality of measurement timestamps and the plurality of RSCPs and the plurality of RSCPDs that are associated with the RTOAs respectively corresponding to the plurality of measurement timestamps; and in still another example, the network device A may choose, based on the indication information included in the first request or based on an actual requirement of the network device A, to report only one of the RSCPs and the RSCPDs. For example, the network device A may choose to associate the RSCPs respectively corresponding to the plurality of measurement timestamps with the RTOAs and the network device receive-transmit time differences that respectively correspond to the plurality of measurement timestamps, and report them to the location management apparatus, and in this case, the first information sent by the network device A to the location management apparatus includes the RSCPs respectively corresponding to the plurality of measurement timestamps and the plurality of RTOAs and the plurality of network device receive-transmit time differences that are associated with the RSCPs respectively corresponding to the plurality of measurement timestamps.

In another possible implementation, when the first communication apparatus may obtain one or more first time measurement results and one or more carrier phase measurement results by measuring the positioning reference signal, the first communication apparatus may directly report the one or more first time measurement results and the one or more carrier phase measurement results to the location management apparatus. In an example, when the first communication apparatus measures the positioning reference signal to obtain one first time measurement result and one or more carrier phase measurement results, the first communication apparatus may directly report the first time measurement result and the one or more carrier phase measurement results together to the location management apparatus, or the first communication apparatus may separately report the first time measurement result and the one or more carrier phase measurement results to the location management apparatus. In another example, when the first communication apparatus measures the positioning reference signal to obtain a plurality of first time measurement results and one or more carrier phase measurement results, the first communication apparatus may directly report the plurality of first time measurement results and the one or more carrier phase measurement results together to the location management apparatus, or the first communication apparatus may separately report the plurality of first time measurement results and the one or more carrier phase measurement results to the location management apparatus.

In still another possible implementation, when the first communication apparatus may obtain one first time measurement result and one or more carrier phase measurement results by measuring the positioning reference signal, the first communication apparatus may select the first time measurement result as a time measurement result (namely, the second time measurement result) to be reported to the location management apparatus. Then, the first communication apparatus may associate the first time measurement result with the one or more carrier phase measurement results, and report them to the location management apparatus. In this case, the first information sent by the first communication apparatus to the location management apparatus includes the first time measurement result and the one or more carrier phase measurement results associated with the first time measurement result.

In still another possible implementation, when the first communication apparatus may obtain a plurality of first time measurement results and one or more carrier phase measurement results by measuring the positioning reference signal, the first communication apparatus may first smooth the plurality of first time measurement results based on the indication information included in the first request or based on an actual requirement of the first communication apparatus, to obtain the second time measurement result. Then, the first communication apparatus may associate the second time measurement result with the one or more carrier phase measurement results, and report them to the location management apparatus. In this case, the first information sent by the first communication apparatus to the location management apparatus includes the second time measurement result and the one or more carrier phase measurement results associated with the second time measurement result.

Optionally, the first communication apparatus may smooth the plurality of first time measurement results in, but not limited to, the following implementations:

Manner 1: The first communication apparatus performs averaging calculation processing on the plurality of first time measurement results to obtain an average calculation result, and may use the average calculation result as the second time measurement result.

Manner 2: The first communication apparatus selects at least one first time measurement result that satisfies a specified condition from the plurality of first time measurement results, performs averaging calculation processing on the at least one first time measurement result that satisfies the specified condition to obtain an average calculation result, and may use the average calculation result as the second time measurement result. Optionally, the specified condition includes: a value corresponding to the first time measurement result is less than or equal to a specified threshold.

For example, the first time measurement result is an RTOA. The first communication apparatus may select, from a plurality of RTOAs, at least one RTOA whose RTOA value is less than or equal to the specified threshold. Then, the first communication apparatus may perform averaging calculation processing on the at least one RTOA to obtain an average RTOA value, and may use the average RTOA value as a time measurement result to be reported to the location management apparatus. In this way, in the method, some RTOAs fluctuating significantly can be removed, thereby avoiding impact of noise data such as some unreliable RTOAs on time estimation accuracy, which can effectively improve positioning precision.

Optionally, in an example, when there is one second time measurement result, the second time measurement result is associated with the one or more carrier phase measurement results. In another example, when there are a plurality of second time measurement results, the plurality of second time measurement results are associated with the one or more carrier phase measurement results.

For example, the following uses the technical solution provided in the foregoing manner 2 as an example to describe, by using the following several possible examples, an implementation process in which the first communication apparatus sends the first information to the location management apparatus.

Example 1: For example, the first communication apparatus is a network device A, the first time measurement result is an RTOA, and the carrier phase measurement result is an RSCP. It is assumed that there are three RTOAs, namely, an RTOA1, an RTOA2, and an RTOA3. A value of the RTOA1 is s1, a value of the RTOA2 is s2, and a value of the RTOA3 is s3. It is assumed that the specified threshold is s0, where s2 is greater than s0, and both s1 and s3 are less than s0. The network device A may select, from the three RTOAs, an RTOA whose value is less than or equal to s0. Because both the value s1 of the RTOA1 and the value s3 of the RTOA3 are less than s0, the network device A may select the value of the RTOA1 and the value of the RTOA3 to participate in averaging calculation processing, in other words, the network device A performs averaging calculation processing on the value s1 of the RTOA1 and the value s3 of the RTOA3, to obtain an average RTOA value, where the average RTOA value may be used as a time measurement result to be reported to the location management apparatus. Then, the network device A may associate the average RTOA value with a part or all of one or more RSCPs, and report them to the location management apparatus. In this case, the first information sent by the network device A to the location management apparatus includes the average RTOA value and the part or all of the one or more RSCPs associated with the average RTOA value.

Example 2: For example, the first communication apparatus is a network device A, the first time measurement result is an RTOA and a network device (for example, base station/TRP) receive-transmit time difference, and the carrier phase measurement result is an RSCP. It is assumed that there are three RTOAs, namely, an RTOA1, an RTOA2, and an RTOA3, and there are three network device receive-transmit time differences, namely, a network device receive-transmit time difference 1, a network device receive-transmit time difference 2, and a network device receive-transmit time difference 3. A value of the RTOA1 is s1, a value of the RTOA2 is s2, and a value of the RTOA3 is s3. It is assumed that the specified threshold is s0, where s2 is greater than so, and s1 and s3 are both less than s0; and a value of the network device receive-transmit time difference 1 is r1, a value of the network device receive-transmit time difference 2 is r2, and a value of the network device receive-transmit time difference 3 is r3, where r1 is greater than s0, and r2 and r3 are both less than s0. The network device A may select, from the three RTOAs, an RTOA whose value is less than or equal to s0. Because both the value s1 of the RTOA1 and the value s3 of the RTOA3 are less than s0, the network device A may select the value of the RTOA1 and the value of the RTOA3 to participate in averaging calculation processing, in other words, the network device A performs averaging calculation processing on the value s1 of the RTOA1 and the value s3 of the RTOA3, to obtain an average RTOA value, where the average RTOA value may be used as a time measurement result to be reported to the location management apparatus. In addition, the network device A may select, from the three network device receive-transmit time differences, a network device receive-transmit time difference whose value is less than or equal to s0. Because both the value r2 of the network device receive-transmit time difference 2 and the value r3 of the network device receive-transmit time difference 3 are less than s0, the network device A may select the value of the network device receive-transmit time difference 2 and the value of the network device receive-transmit time difference 3 to participate in averaging calculation processing, in other words, the network device A performs averaging calculation processing on the value r2 of the network device receive-transmit time difference 2 and the value r3 of the network device receive-transmit time difference 3, to obtain an average network device receive-transmit time difference value, where the average network device receive-transmit time difference value may be used as a time measurement result to be reported to the location management apparatus. In an example, the network device A may associate the average RTOA value and the average network device receive-transmit time difference value with a part or all of one or more RSCPs, and report them to the location management apparatus. In this case, the first information sent by the network device A to the location management apparatus includes the average RTOA value, the average network device receive-transmit time difference value, and the part or all of the one or more RSCPs and associated with the average RTOA value and the average network device receive-transmit time difference value. In another example, the network device A may choose to associate one or both of the average RTOA value and the average network device receive-transmit time difference value with one or more RSCPs, and report them to the location management apparatus. In this case, the first information sent by the network device A to the location management apparatus includes the one or both of the average RTOA value and the average network device receive-transmit time difference value, and the one or more RSCPs associated with the one or both of the average RTOA value and the average network device receive-transmit time difference value.

In still another possible implementation, when the first communication apparatus may obtain a plurality of first time measurement results and one or more carrier phase measurement results by measuring the positioning reference signal, the first communication apparatus may select, from the plurality of first time measurement results based on the indication information included in the first request or based on an actual requirement of the first communication apparatus, a first time measurement result corresponding to a largest measurement timestamp as the second time measurement result. Then, the first communication apparatus may associate the second time measurement result with the one or more carrier phase measurement results, and report them to the location management apparatus. In this case, the first information sent by the first communication apparatus to the location management apparatus includes the second time measurement result and the one or more carrier phase measurement results associated with the second time measurement result.

Optionally, in an example, when there is one second time measurement result, the second time measurement result is associated with the one or more carrier phase measurement results. In another example, when there are a plurality of second time measurement results, the plurality of second time measurement results are associated with the one or more carrier phase measurement results.

For example, the first communication apparatus is a network device A, the first time measurement result is an RTOA, and the carrier phase measurement result is an RSCP. It is assumed that there are three RTOAs, namely, an RTOA1, an RTOA2, and an RTOA3. A measurement timestamp of the RTOA1 is t1, a measurement timestamp of the RTOA2 is t2, and a measurement timestamp of the RTOA3 is t3, where t1<t2<t3. The network device A may select, from the three RTOAs, the RTOA 3 corresponding to a largest measurement timestamp as a time measurement result to be reported to the location management apparatus. Then, the network device A may associate the RTOA3 with a part or all of one or more RSCPs, and report them to the location management apparatus. In this case, the first information sent by the network device A to the location management apparatus includes the RTOA3 and the part or all of the one or more RSCPs and associated with the RTOA3.

For another example, the first communication apparatus is a network device A, the first time measurement result is an RTOA and a network device (for example, base station/TRP) receive-transmit time difference, and the carrier phase measurement result is an RSCP. It is assumed that there are three RTOAs, namely, an RTOA1, an RTOA2, and an RTOA3, and there are three network device receive-transmit time differences, namely, a network device receive-transmit time difference 1, a network device receive-transmit time difference 2, and a network device receive-transmit time difference 3. A measurement timestamp of the RTOA1 is t01, a measurement timestamp of the RTOA2 is t02, and a measurement timestamp of the RTOA3 is t03, where t01<t02<t03. A measurement timestamp of the network device receive-transmit time difference 1 is t11, a measurement timestamp of the network device receive-transmit time difference 2 is t12, and a measurement timestamp of the network device receive-transmit time difference 3 is t13, where t11<t12<t13. The network device A may select, from the three RTOAs, the RTOA3 corresponding to the largest measurement timestamp as a time measurement result to be reported to the location management apparatus, and may select, from the three network device receive-transmit time differences, the network device receive-transmit time difference 3 corresponding to the largest corresponding measurement timestamp as a time measurement result to be reported to the location management apparatus. Then, the network device A may associate one or both of the RTOA3 and the network device receive-transmit time difference 3 with one or more RSCPs, and report them to the location management apparatus. In this case, the first information sent by the network device A to the location management apparatus includes the one or both of the network device receive-transmit time difference 3 and the RTOA3, and the one or more RSCPs associated with the one or both of the network device receive-transmit time difference 3 and the RTOA3.

In still another possible implementation, when the first communication apparatus may obtain a plurality of first time measurement results and one or more carrier phase measurement results by measuring the positioning reference signal, the first communication apparatus may select, from the plurality of first time measurement results based on the indication information included in the first request or based on an actual requirement of the first communication apparatus, any one first time measurement result as the second time measurement result. Then, the first communication apparatus may associate the second time measurement result with the one or more carrier phase measurement results, and report them to the location management apparatus. In this case, the first information sent by the first communication apparatus to the location management apparatus includes the second time measurement result and the one or more carrier phase measurement results associated with the second time measurement result.

In still another possible implementation, when the first communication apparatus may obtain a plurality of first time measurement results and one or more carrier phase measurement results by measuring the positioning reference signal, the first communication apparatus may sort, in descending order based on the indication information included in the first request or based on an actual requirement of the first communication apparatus, measurement timestamps corresponding to the plurality of first time measurement results, and selects any one first time measurement result in first n first time measurement results as the second time measurement result. Then, the first communication apparatus may associate the second time measurement result with the one or more carrier phase measurement results, and report them to the location management apparatus. In this case, the first information sent by the first communication apparatus to the location management apparatus includes the second time measurement result and the one or more carrier phase measurement results associated with the second time measurement result.

In still another possible implementation, when the first communication apparatus may obtain a plurality of first time measurement results and one or more carrier phase measurement results by measuring the positioning reference signal, the first communication apparatus may select, from the plurality of first time measurement results based on the indication information included in the first request or based on an actual requirement of the first communication apparatus, at least one first time measurement result that satisfies a specified condition. Then, the first communication apparatus may select any one first time measurement result from the at least one first time measurement result that satisfies the specified condition as the second time measurement result. Then, the first communication apparatus may associate the second time measurement result with the one or more carrier phase measurement results, and report them to the location management apparatus. In this case, the first information sent by the first communication apparatus to the location management apparatus includes the second time measurement result and the one or more carrier phase measurement results associated with the second time measurement result. Optionally, the specified condition includes: a value corresponding to the first time measurement result is less than or equal to a specified threshold.

Optionally, in an example, when there is one second time measurement result, the second time measurement result is associated with the one or more carrier phase measurement results. In another example, when there are a plurality of second time measurement results, the plurality of second time measurement results are associated with the one or more carrier phase measurement results.

For example, the example in which the first communication apparatus is a network device A, the first time measurement result is an RTOA, and the carrier phase measurement result is an RSCP is still used. It is assumed that there are three RTOAs, namely, an RTOA1, an RTOA2, and an RTOA3. A value of the RTOA1 is s1, a value of the RTOA2 is s2, and a value of the RTOA3 is s3. It is assumed that the specified threshold is s0, where s2 is greater than s0, and both s1 and s3 are less than s0. The network device A may select, from the three RTOAs, an RTOA whose value is less than or equal to s0. Because both the value s1 of the RTOA1 and the value s3 of the RTOA3 are less than s0, the network device A may select one of the RTOA1 and the RTOA3 as a time measurement result to be reported to the location management apparatus. For example, the network device A may select the RTOA1 as the time measurement result to be reported to the location management apparatus. Then, the network device A may associate the RTOA1 with a part or all of one or more RSCPs, and report them to the location management apparatus. In this case, the first information sent by the network device A to the location management apparatus includes the RTOA1 and the part or all, of the one or more RSCPs, associated with the RTOA1.

For another example, the example in which the first communication apparatus is a network device A, the first time measurement result is an RTOA and a network device (for example, base station/TRP) receive-transmit time difference, and the carrier phase measurement result is an RSCP is still used. It is assumed that there are three RTOAs, namely, an RTOA1, an RTOA2, and an RTOA3, and there are three network device receive-transmit time differences, namely, a network device receive-transmit time difference 1, a network device receive-transmit time difference 2, and a network device receive-transmit time difference 3. A value of the RTOA1 is s1, a value of the RTOA2 is s2, and a value of the RTOA3 is s3. It is assumed that the specified threshold is s0, where s2 is greater than s0, s1 and s3 are both less than s0, a value of the network device receive-transmit time difference 1 is r1, a value of the network device receive-transmit time difference 2 is r2, and a value of the network device receive-transmit time difference 3 is r3, where r1 is greater than s0, and r2 and r3 are both less than s0. The network device A may select, from the three RTOAs, an RTOA whose value is less than or equal to s0. Because both the value s1 of the RTOA1 and the value s3 of the RTOA3 are less than s0, the network device A may select one of the RTOA1 and the RTOA3 as a time measurement result to be reported to the location management apparatus. In addition, the network device A may select, from the three network device receive-transmit time differences, a network device receive-transmit time difference whose value is less than or equal to s0. Because both the value r2 of the network device receive-transmit time difference 2 and the value r3 of the network device receive-transmit time difference 3 are less than s0, the network device A may select one of the network device receive-transmit time difference 2 and the network device receive-transmit time difference 3 as a time measurement result to be reported to the location management apparatus. For example, the network device A may select the RTOA1 and the network device receive-transmit time difference 2 as the time measurement result to be reported to the location management apparatus.

In an example, the network device A may associate the RTOA1 and the network device receive-transmit time difference 2 with a part or all of one or more RSCPs, and report them to the location management apparatus. In this case, the first information sent by the network device A to the location management apparatus includes the RTOA1 and the network device receive-transmit time difference 2, and the part or all of the one or more RSCPs and associated with the average RTOA value and the average network device receive-transmit time difference value.

In another example, the network device A may choose to associate one or both of the RTOA1 and the network device receive-transmit time difference 2 with one or more RSCPs, and report them to the location management apparatus. In this case, the first information sent by the network device A to the location management apparatus includes the one or both of the RTOA1 and the network device receive-transmit time difference 2, and the one or more RSCPs associated with the one or both of the RTOA1 and the network device receive-transmit time difference 2.

Step 304: The location management apparatus positions the second communication apparatus or the first communication apparatus based on the first information.

Optionally, in a possible implementation, when the first communication apparatus is a network device, and the second communication apparatus is a terminal device, after receiving the first information from the network device, the location management apparatus may perform corresponding carrier phase resolution based on one or more second time measurement results and one or more carrier phase measurement results that are for the terminal device and that are included in the first information, to determine location information of the terminal device, so as to position the terminal device.

In another possible implementation, when the first communication apparatus is a network device, and the second communication apparatus is a terminal device and a positioning assistance node, after separately receiving the first information for the terminal device and the first information for the positioning assistance node from the network device, the location management apparatus may perform corresponding double-difference carrier phase resolution based on one or more second time measurement results included in the first information for the terminal device, one or more second time measurement results included in the first information for the positioning assistance node, one or more carrier phase measurement results included in the first information for the terminal device, and one or more carrier phase measurement results included in the first information for the positioning assistance node, to determine location information of the terminal device, so as to position the terminal device.

In still another possible implementation, when the second communication apparatus is a network device, and the first communication apparatus is a terminal device, after receiving the first information from the terminal device, the location management apparatus may perform corresponding carrier phase resolution based on one or more second time measurement results for the terminal device and one or more carrier phase measurement results for the terminal device that are included in the first information, to determine location information of the terminal device, so as to position the terminal device.

In still another possible implementation, when the second communication apparatus is a network device, and the first communication apparatus is a terminal device and a positioning assistance node, after separately receiving the first information from the terminal device and the positioning assistance node, the location management apparatus may perform corresponding double-difference carrier phase resolution based on one or more second time measurement results included in the first information for the terminal device, one or more second time measurement results included in the first information for the positioning assistance node, one or more carrier phase measurement results included in the first information for the terminal device, and one or more carrier phase measurement results included in the first information for the positioning assistance node, to determine location information of the terminal device, so as to position the terminal device.

In still another possible implementation, when the second communication apparatus is a network device, and the first communication apparatus is a positioning assistance node or a terminal device and a positioning assistance node, the positioning assistance node may also send the first information for the positioning assistance node to the terminal device through a sidelink. This possible implementation is for UE-based positioning. In this possible implementation, the terminal device does not need to report a measurement result to the location management apparatus, and the terminal device may determine a location of the terminal device based on at least one first time measurement result and at least one carrier phase measurement result that are measured by the terminal device and at least one first time measurement result and at least one carrier phase measurement result that are measured by the positioning assistance node.

It can be learned from the foregoing step 301 to step 304 that, the first communication apparatus correspondingly processes the at least one first time measurement result to obtain the second time measurement result, associates the second time measurement result with the at least one carrier phase measurement result and includes them in the first information, and reports the first information to the location management apparatus. Therefore, the number of reported first time measurement results can be effectively reduced, so that resource overheads of the measurement result in a transmission process can be effectively reduced, and the carrier phase measurement result and the time measurement result can be jointly reported. In addition, the second time measurement result and the one or more carrier phase measurement results are reported together to the location management apparatus. Therefore, this can effectively assist the location management apparatus in performing corresponding carrier phase resolution. In addition, the first communication apparatus reports the one or more carrier phase measurement results to the location management apparatus, so that the location management apparatus can obtain more carrier phase information and perform corresponding carrier phase resolution. Therefore, carrier phase positioning precision can be effectively improved.

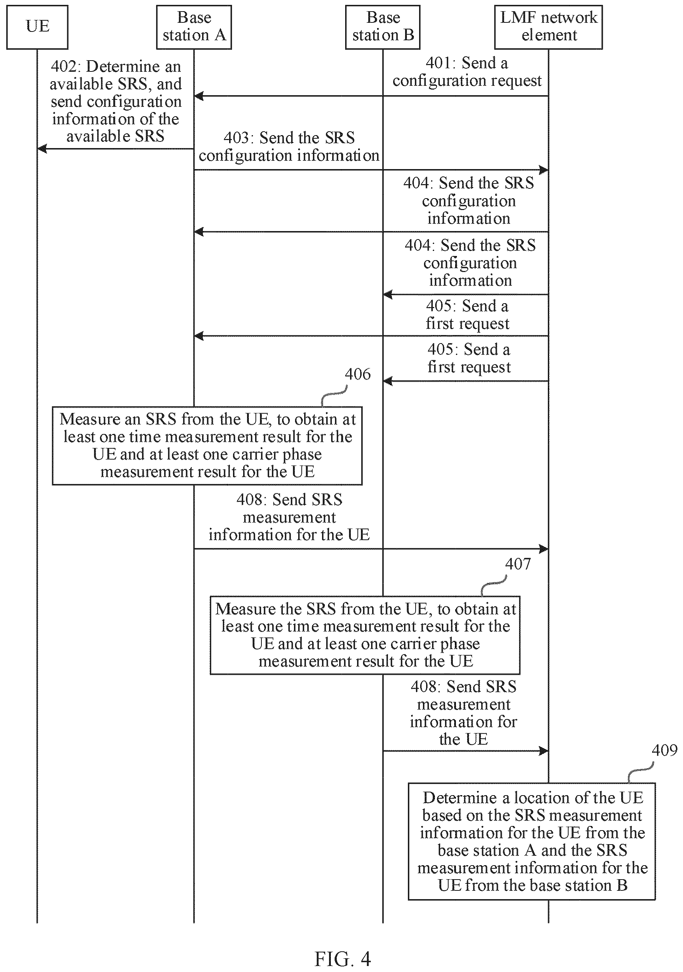

Based on the implementation solution of the positioning data transmission method shown in FIG. 3, the following describes in detail the positioning data transmission method shown in FIG. 3 by using specific examples shown in FIG. 4 to FIG. 5B by using an example in which the positioning reference signal is an uplink positioning reference signal. In the following examples, an example in which the uplink positioning reference signal is an SRS, the positioning assistance node is a PRU, the second communication apparatus is a UE (or a PRU), or a UE and a PRU, the first communication apparatus is a serving base station (to be specific, a base station to which a serving cell on which the UE camps belongs, for example, a base station A) and at least one neighboring base station (to be specific, a base station to which a neighboring cell of the serving cell on which the UE camps belongs, for example, a base station B), and the location management apparatus is an LMF network element is used for description. Optionally, the first communication apparatus may alternatively be a TRP. For example, the first communication apparatus is a serving TRP and at least one neighboring TRP. Optionally, the first communication apparatus may alternatively be a serving base station, or the first communication apparatus may be a serving TRP.

FIG. 4 exemplarily illustrates a schematic flowchart of another positioning data transmission method according to an embodiment of this application. The method is applicable to the architectures of the communication systems shown in FIG. 1, FIG. 2a, and FIG. 2b. An application scenario of the positioning data transmission method shown in FIG. 4 is a positioning scenario in which no PRU exists. As shown in FIG. 4, a specific procedure of the method may include the following steps.

Step 401: An LMF network element sends a configuration request to a base station A. The base station A receives the configuration request.

The configuration request is used to request the base station A to allocate SRS configuration information to a UE. For example, the SRS configuration information may include but is not limited to a time domain resource, a frequency domain resource, a signal transmission period, or identification information of an SRS.

Optionally, the LMF network element may send the configuration request to the base station A by using an NR positioning protocol (New Radio positioning protocol annex, NRPPa) or a positioning protocol in another form.

Step 402: The base station A determines an available SRS, and sends configuration information of the available SRS to the UE. The UE receives the configuration information of the available SRS.

Optionally, the base station A may determine some idle or available SRSs based on SRS resource occupation.

Step 403: The base station A sends the SRS configuration information to the LMF network element. The LMF network element receives the SRS configuration information.

Optionally, the base station A may send the SRS configuration information to the LMF network element by using the NR positioning protocol.

Step 404: The LMF network element separately sends the SRS configuration information to the base station A and a base station B. The base station A and the base station B separately receive the SRS configuration information.

Optionally, the LMF network element may select, from a plurality of base stations based on location information of the UE and stored location information of a plurality of base stations, at least one base station, for example, the base station A and the base station B, whose distance to the UE satisfies a specified condition, to participate in positioning of the terminal device. Then, the LMF network element may separately send, by using the NR positioning protocol, the SRS configuration information to the base station A and the base station B that participate in the positioning. The SRS configuration information is used to separately assist the base station A and the base station B in measuring the SRS. Optionally, the specified condition includes one of the following content: a distance between a base station and the UE is less than or equal to a specified threshold, or first m base stations of the plurality of base stations whose distances to the UE are sorted in ascending order.

Step 405: The LMF network element separately sends a first request to the base station A and the base station B. The base station A and the base station B separately receive the first request.

The first request is used to request the base station A and the base station B to report SRS measurement results. Optionally, the first request may alternatively be used to request the base station A and the base station B to start to measure an SRS from the UE.

Optionally, the first request may include measurement time information for measuring the SRS, and the measurement time information may include a measurement time window indicating to measure the SRS, a measurement timestamp indicating to measure the SRS, or the like. For example, the measurement time window may indicate to measure the SRS in a time period of measurement, and the measurement timestamp may indicate a timestamp at which the SRS starts to be measured.

Optionally, the first request may further include indication information. The indication information indicates that the number of time measurement results reported by the base station A or the base station B is the same as the number of reported carrier phase measurement results, or the indication information indicates that the number of time measurement results reported by the base station A or the base station B is different from the number of reported carrier phase measurement results.

For example, for the base station A, the time measurement result is an RTOA, and the carrier phase measurement result is an RSCP. The indication information may indicate that the number of RTOAs reported by the base station A is different from the number of reported RSCPs. For example, the indication information may indicate the base station A to report one RTOA and a plurality of RSCPs.

Optionally, in an example, step 404 and step 405 may be performed in a same step, in other words, the first request and the SRS configuration information are separately sent to the base station A and the base station B by using a same piece of sending information. In another example, an execution ranking of step 404 is the same as an execution ranking of step 405, in other words, step 404 and step 405 are separately performed simultaneously. In still another example, an execution ranking of step 404 may be different from an execution ranking of step 405, in other words, step 404 is performed before step 405, or step 405 is performed before step 404.

Step 406: The base station A measures the SRS from the UE, to obtain at least one first time measurement result for the UE and at least one carrier phase measurement result for the UE.

Optionally, the base station A may measure the SRS in an existing SRS measurement manner. Details are not described herein.

For example, the measurement time information is a measurement timestamp t1, the first time measurement result is an RTOA, and the carrier phase measurement result is an RSCP. The base station A may start to measure the SRS from the UE at the measurement timestamp t1, to obtain one RTOA and one RSCP that correspond to the measurement timestamp t1. In addition, the base station A may separately measure the SRS from the UE at a plurality of measurement timestamps after the measurement timestamp t1, to obtain RTOAs and RSCPs that respectively correspond to the plurality of measurement timestamps.

Step 407: The base station B measures the SRS from the UE, to obtain at least one first time measurement result for the UE and at least one carrier phase measurement result for the UE.

Optionally, the base station B may measure the SRS in an existing SRS measurement manner. Details are not described herein.

For example, the example in which the measurement time information is a measurement timestamp t1, the first time measurement result is an RTOA, and the carrier phase measurement result is an RSCP is still used. The base station B may start to measure the SRS from the UE at the measurement timestamp t1, to obtain one RTOA and one RSCP that correspond to the measurement timestamp t1. In addition, the base station B may separately measure the SRS from the UE at a plurality of measurement timestamps after the measurement timestamp t1, to obtain RTOAs and RSCPs that respectively correspond to the plurality of measurement timestamps.

Step 408: The base station A and the base station B separately send SRS measurement information for the UE to the LMF network element. The LMF network element separately receives the SRS measurement information from the base station A and the base station B.

For example, the SRS measurement information includes one second time measurement result and one or more carrier phase measurement results associated with the second time measurement result, the first time measurement result is an RTOA, and the carrier phase measurement result is an RSCP. In an example, after the base station A obtains corresponding RTOAs by measuring the SRS from the UE at a plurality of measurement timestamps, and after the base station A obtains a second time measurement result RTOA' by smoothing the RTOAs respectively corresponding to the plurality of measurement timestamps, the base station A may associate the second time measurement result RTOA' with a part or all of RSCPs' respectively corresponding to the plurality of measurement timestamps, and report them to the LMF network element. In this case, the SRS measurement information sent by the base station A to the LMF network element includes the second time measurement result RTOA' and the part or all of the RSCPs' respectively corresponding to the plurality of measurement timestamps associated with the second time measurement result RTOA'.

In another example, after the base station B obtains corresponding RTOAs by measuring the SRS from the UE at the plurality of measurement timestamps, and after the base station B obtains a second time measurement result RTOA" by smoothing the RTOAs respectively corresponding to the plurality of measurement timestamps, the base station B may associate the second time measurement result RTOA" with a part or all of RSCPs" respectively corresponding to the plurality of measurement timestamps, and report them to the LMF network element. In this case, the SRS measurement information sent by the base station B to the LMF network element includes the second time measurement result RTOA" and the part or all of the RSCPs" respectively corresponding to the plurality of measurement timestamps associated with the second time measurement result RTOA".

Step 409: The LMF network element determines a location of the UE based on the SRS measurement information for the UE from the base station A and the SRS measurement information for the UE from the base station B.

For example, the example in which the SRS measurement information includes one second time measurement result and one or more carrier phase measurement results associated with the second time measurement result, the first time measurement result is an RTOA, and the carrier phase measurement result is an RSCP is still used, the LMF network element may perform corresponding differential calculation processing based on the second time measurement result RTOA' included in the SRS measurement information for the UE from the base station A, the second time measurement result RTOA" included in the SRS measurement information for the UE from the base station B, one or more RSCPs' included in the SRS measurement information for the UE from the base station A, and one or more RSCPs" included in the SRS measurement information for the UE from the base station B, to determine the location of the UE.

It can be learned from the foregoing step 401 to step 409 that the base station A and the base station B separately smooth a plurality of first time measurement results (for example, RTOAs or base station A/base station B receive-transmit time differences) for the UE, and then associate a smooth result with one or more carrier phase measurement results (for example, an RSCP) for the UE, and report them to the LMF network element. In this way, the number of reported first time measurement results can be reduced, so that resource overheads generated in a measurement result reporting process can be effectively reduced. In addition, because the plurality of first time measurement results are smoothed, impact of some unreliable first time measurement results on time estimation can be avoided. Therefore, time estimation precision can be improved. In addition, the second time measurement result and the one or more carrier phase measurement results are reported together to the LMF network element. Therefore, this can effectively assist the LMF network element in performing corresponding carrier phase resolution. In addition, the base station A or the base station B may separately report the plurality of carrier phase measurement results to the LMF network element simultaneously, so that the LMF network element can obtain more carrier phase information and perform carrier phase resolution. Therefore, carrier phase resolution precision can be effectively improved. In addition, because the first request sent by the LMF network element to the base station A and the base station B includes the measurement time information for measuring the SRS, the base station A and the base station B may simultaneously measure the SRS from the UE at a corresponding time point. Then, the base station A and the base station B separately report the SRS measurement information for the UE to the LMF network element. This can ensure that the LMF network element can perform differential calculation processing by using the carrier phase measurement results obtained by the base station A and the base station B at the same time. In this way, a random initial phase error on a terminal side can be eliminated, and phase jump impact caused by uplink and downlink switching on the terminal side can be eliminated. In addition, another carrier phase deviation can be eliminated.

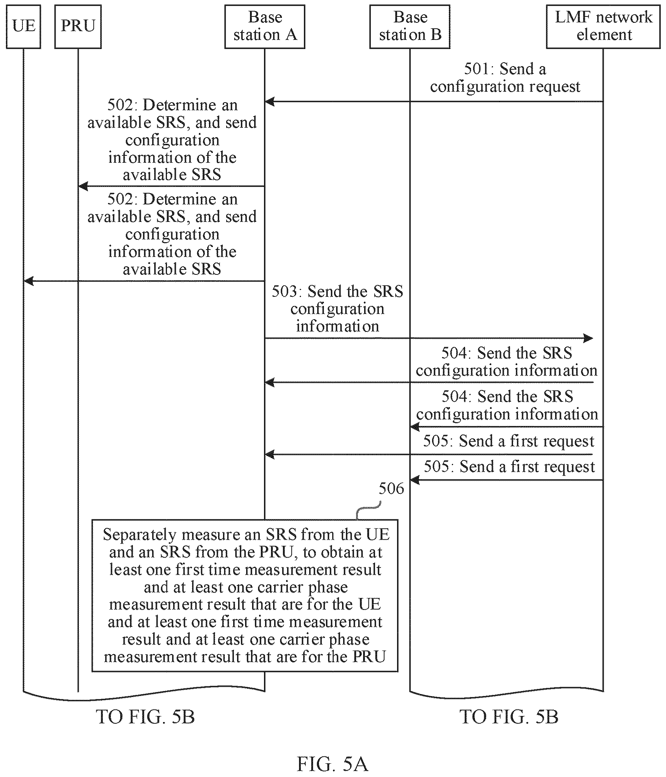

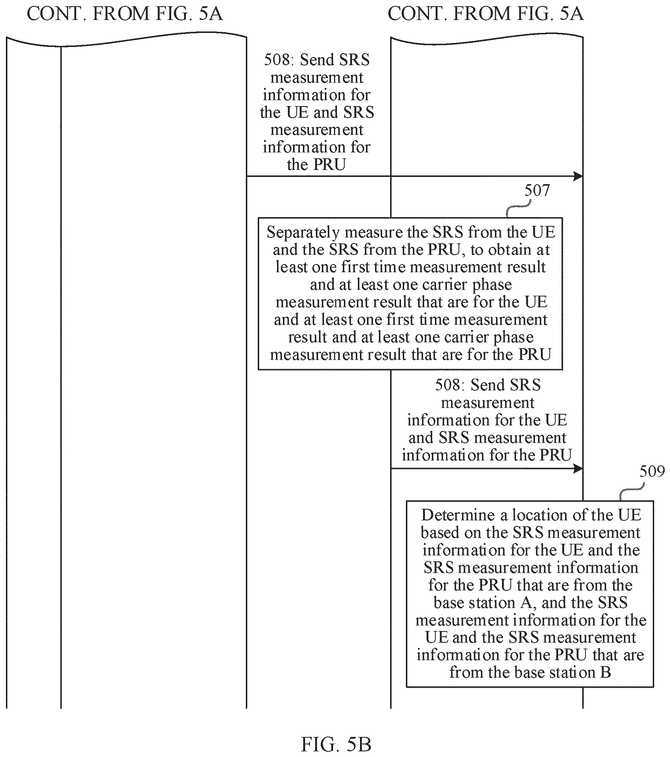

FIG. 5A and FIG. 5B exemplarily illustrate a schematic flowchart of another positioning data transmission method according to an embodiment of this application. The method is applicable to the architectures of the communication systems shown in FIG. 1, FIG. 2a, and FIG. 2b. An application scenario of the positioning data transmission method shown in FIG. 5A and FIG. 5B is a positioning scenario in which there is a UE and a PRU. As shown in FIG. 5A and FIG. 5B, a specific procedure of the method may include the following steps.

Step 501: An LMF network element sends a configuration request to a base station A. The base station A receives the configuration request.

The configuration request is used to request the base station A to allocate SRS configuration information to the UE and the PRU. For example, the SRS configuration information may include but is not limited to a time domain resource, a frequency domain resource, a signal transmission period, or identification information of an SRS.

Optionally, the LMF network element may send the configuration request to the base station A by using an NR positioning protocol (New Radio positioning protocol annex, NRPPa) or a positioning protocol in another form.

Step 502: The base station A determines an available SRS, and separately sends configuration information of the available SRS to the UE and the PRU. The UE receives the configuration information of the available SRS.

Optionally, the base station A may determine some idle or available SRSs based on SRS resource occupation.

Step 503: The base station A sends the SRS configuration information to the LMF network element. The LMF network element receives the SRS configuration information.

Optionally, the base station A may send the SRS configuration information to the LMF network element by using the NR positioning protocol.

Step 504: The LMF network element separately sends the SRS configuration information to the base station A and a base station B. The base station A and the base station B separately receive the SRS configuration information.

Optionally, for an implementation used in step 504, refer to the implementation used in step 404. Details are not described herein again.

Step 505: The LMF network element separately sends a first request to the base station A and the base station B. The base station A and the base station B separately receive the first request.

Optionally, for an implementation used in step 505, refer to the implementation used in step 405. Details are not described herein again.

For example, measurement time information that is included in the first request and that is used to measure an SRS from the UE may be the same as measurement time information that is used to measure an SRS from the PRU.

Step 506: The base station A separately measures the SRS from the UE and the SRS from the PRU, to obtain at least one first time measurement result and at least one carrier phase measurement result that are for the UE and at least one first time measurement result and at least one carrier phase measurement result that are for the PRU.

Optionally, for an implementation used in step 506, refer to the implementation used in step 406. Details are not described herein again.

Step 507: The base station B separately measures the SRS from the UE and the SRS from the PRU, to obtain at least one first time measurement result and at least one carrier phase measurement result that are for the UE and at least one first time measurement result and at least one carrier phase measurement result that are for the PRU.

Optionally, for an implementation used in step 507, refer to the implementation used in step 407. Details are not described herein again.

Step 508: The base station A and the base station B separately send SRS measurement information for the UE and SRS measurement information for the PRU to the LMF network element. The LMF network element separately receives the SRS measurement information for the UE and the SRS measurement information for the PRU from the base station A and the base station B.

Optionally, for an implementation used in step 508, refer to the implementation used in step 408. Details are not described herein again.

Step 509: The LMF network element determines a location of the UE based on the SRS measurement information for the UE and the SRS measurement information for the PRU that are from the base station A, and the SRS measurement information for the UE and the SRS measurement information for the PRU that are from the base station B.

For example, the example in which the SRS measurement information includes one second time measurement result and one or more carrier phase measurement results associated with the second time measurement result, the first time measurement result is an RTOA, and the carrier phase measurement result is an RSCP is still used, the LMF network element may perform corresponding double-difference calculation processing based on a second time measurement result RTOA' and one or more RSCPs' that are included in the SRS measurement information for the UE from the base station A, a second time measurement result RTOA‴ and one or more RSCPs‴ that are included in the SRS measurement information for the PRU from the base station A, a second time measurement result RTOA" and one or more RSCPs" that are included in the SRS measurement information for the UE from the base station B, and a second time measurement result RTOAʺʺ and one or more RSCPsʺʺ that are included in the SRS measurement information for the PRU from the base station B, to determine the location of the UE.

It can be learned from the foregoing step 501 to step 509 that the base station A and the base station B separately smooth a plurality of first time measurement results (for example, RTOAs or base station A/base station B receive-transmit time differences) for the UE, then associate a smooth result with one or more carrier phase measurement results (for example, an RSCP) for the UE, and report them to the LMF network element; and separately smooth a plurality of first time measurement results (for example, RTOAs or base station A/base station B receive-transmit time differences) for the PRU, then associate a smooth result with one or more carrier phase measurement results (for example, an RSCP) for the PRU, and report them to the LMF network element. In this way, the number of reported first time measurement results can be reduced, so that resource overheads generated in a measurement result reporting process can be effectively reduced. In addition, because the plurality of first time measurement results are smoothed, impact of some unreliable first time measurement results on time estimation can be avoided. Therefore, time estimation precision can be improved.

In addition, the second time measurement result and the one or more carrier phase measurement results are reported together to the LMF network element. Therefore, this can effectively assist the LMF network element in performing corresponding carrier phase resolution. In addition, the base station A or the base station B may separately report the plurality of carrier phase measurement results for the UE and the plurality of carrier phase measurement results for the PRU to the LMF network element simultaneously, so that the LMF network element can obtain more carrier phase information and perform double-difference carrier phase resolution. Therefore, carrier phase resolution precision can be effectively improved.

In addition, because the first request sent by the LMF network element to the base station A and the base station B includes the measurement time information for measuring the SRS, the base station A and the base station B may simultaneously measure the SRS from the UE and the SRS from the PRU at a corresponding time point. Then, the base station A and the base station B separately report the SRS measurement information for the UE and the SRS measurement information for the PRU to the LMF network element. This can ensure that the LMF network element can perform differential calculation processing by using the carrier phase measurement results obtained by the base station A and the base station B at the same time. In this way, a random initial phase error on a terminal side can be eliminated, and a phase jump impact caused by uplink and downlink switching on the terminal side can be eliminated. In addition, another carrier phase deviation can further be eliminated. In addition, the measurement time information for the UE may be the same as the measurement time information for the PRU. In this case, the LMF network element performs double-difference calculation processing by using the carrier phase measurement result for the UE and the carrier phase measurement result for the PRU that are obtained by the base station A (or the base station B) through measurement at the same time, so that a phase error on a base station side can be eliminated, to help improve carrier phase positioning precision.

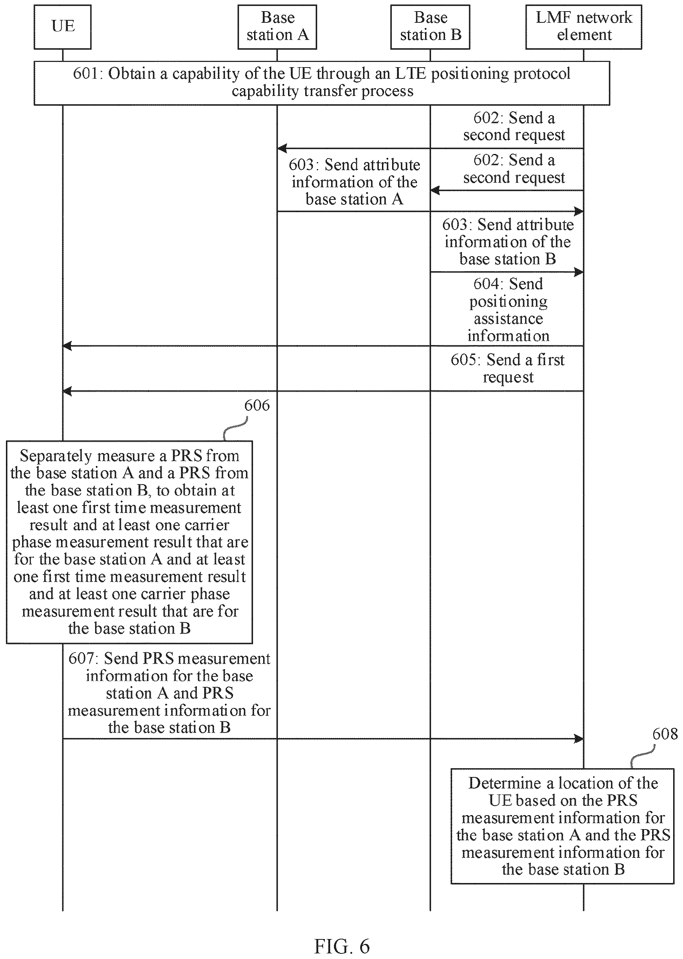

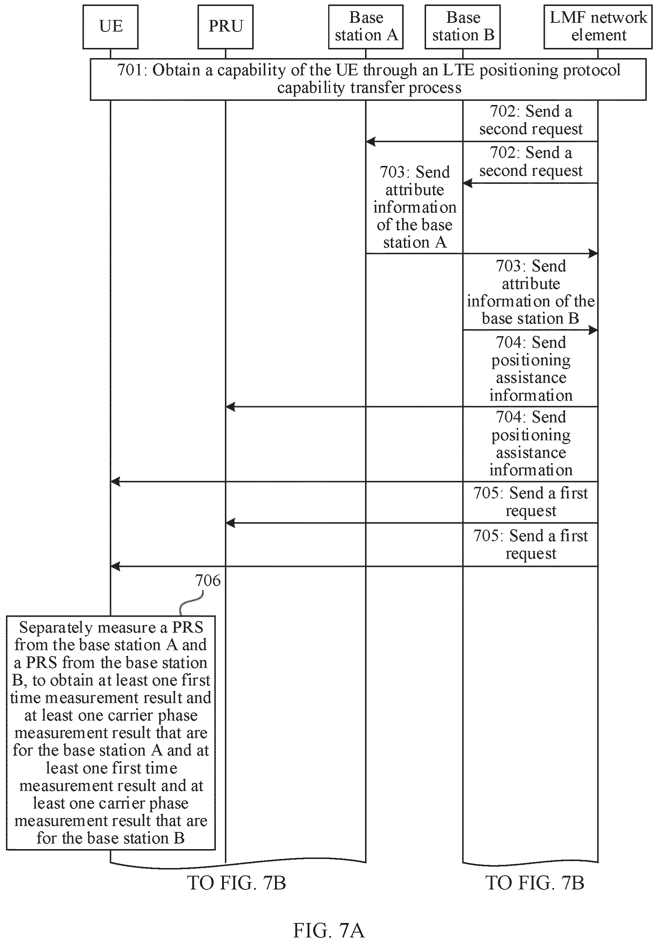

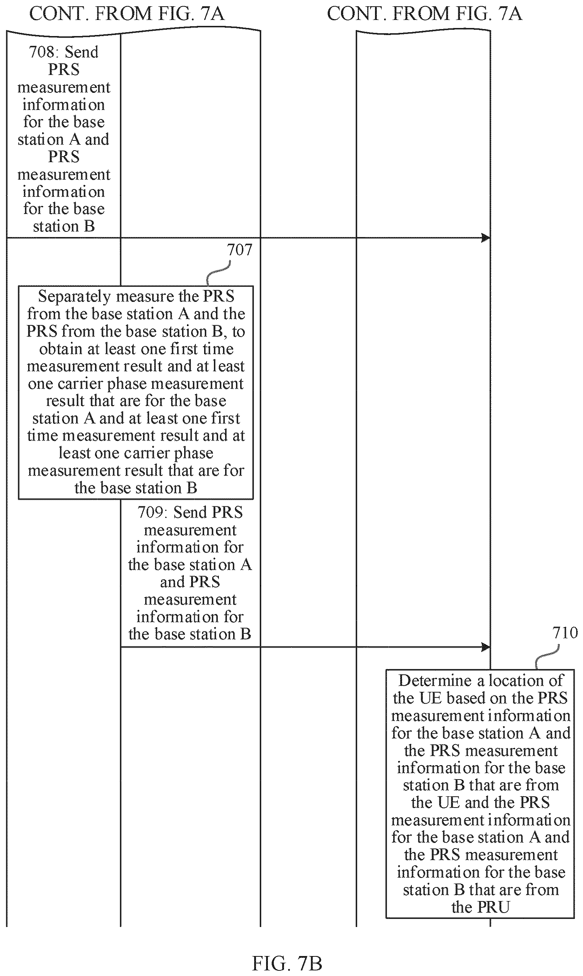

Based on the implementation solution of the positioning data transmission method shown in FIG. 3, the following describes in detail the positioning data transmission method shown in FIG. 3 by using specific examples shown in FIG. 6 and FIG. 7A and FIG. 7B by using an example in which the positioning reference signal is a downlink positioning reference signal. In the following examples, an example in which the downlink positioning reference signal is a PRS, the positioning assistance node is a PRU, the first communication apparatus is a UE (or a PRU), or a UE and a PRU, the second communication apparatus is a serving base station (to be specific, a base station to which a serving cell on which the UE camps belongs, for example, a base station A) and at least one neighboring base station (to be specific, a base station to which a neighboring cell of the serving cell on which the UE camps belongs, for example, a base station B), and the location management apparatus is an LMF network element is used for description. Optionally, the second communication apparatus may alternatively be a TRP. For example, the first communication apparatus is a serving TRP and at least one neighboring TRP.

FIG. 6 exemplarily illustrates a schematic flowchart of another positioning data transmission method according to an embodiment of this application. The method is applicable to the architectures of the communication systems shown in FIG. 1, FIG. 2a, and FIG. 2b. An application scenario of the positioning data transmission method shown in FIG. 6 is a positioning scenario in which no PRU exists. As shown in FIG. 6, a specific procedure of the method may include the following steps.

Step 601: An LMF network element obtains a capability of a UE through an LTE positioning protocol capability transfer process.

For example, the LMF network element obtains a positioning-related capability, a PRS receiving capability, a measurement capability, and the like of the UE through the LTE positioning protocol (LTE positioning protocol, LPP) capability transfer process.

Step 602: The LMF network element separately sends a second request to a base station A and a base station B. The base station A and the base station B separately receive the second request.

Optionally, the second request is used to request to obtain attribute information of the base station A (or the base station B). For example, the attribute information may include but is not limited to an identifier of the base station, information about a cell covered by the base station, location coordinates, or PRS configuration information.

Step 603: The base station A and the base station B separately send the attribute information to the LMF network element. The LMF network element separately receives the attribute information from the base station A and the base station B.

Step 604: The LMF network element sends positioning assistance information to the UE. The UE receives the positioning assistance information.

For example, the positioning assistance information may include at least one of the following: the PRS configuration information, location information of the base station A, location information of the base station B, an identifier of the base station A, or an identifier of the base station B.

Step 605: The LMF network element sends a first request to the UE. The UE receives the first request.

The first request is used to request the UE to report a PRS measurement result. Optionally, the first request may alternatively be used to request the UE to separately start to measure a PRS from the base station A and a PRS from the base station B.

Optionally, the first request may include measurement time information for measuring the PRS, and the measurement time information may include a measurement time window indicating to measure the PRS, a measurement timestamp indicating to measure the PRS, or the like. For example, the measurement time window may indicate to measure the PRS in a measurement time period, and the measurement timestamp may indicate a timestamp at which the PRS starts to be measured.

Optionally, the first request may further include indication information. The indication information indicates that the number of time measurement results reported by the UE is the same as the number of reported carrier phase measurement results, or the indication information indicates that the number of time measurement results reported by the UE is different from the number of reported carrier phase measurement results.

For example, the time measurement result is an RSTD, and the carrier phase measurement result is an RSCPD. The indication information may indicate that the number of RSTDs reported by the UE is different from the number of reported RSCPDs. For example, the indication information may indicate the UE to report one RSTD and a plurality of RSCPDs.

Step 606: The UE separately measures the PRS from the base station A and the PRS from the base station B, to obtain at least one first time measurement result and at least one carrier phase measurement result that are for the base station A and at least one first time measurement result and at least one carrier phase measurement result that are for the base station B.

Optionally, the UE may measure the PRS in an existing PRS measurement manner. Details are not described herein.

For example, the measurement time information is a measurement timestamp T1, the first time measurement result is an RSTD, and the carrier phase measurement result is an RSCPD. The UE may start to separately measure the PRS from the base station A and the PRS from the base station B at the measurement timestamp T1, to obtain one RSTD and one RSCPD, for the base station A, that correspond to the measurement timestamp T1, and one RSTD and one RSCPD, for the base station B, that correspond to the measurement timestamp T1. In addition, the UE may separately measure the PRS from the base station A and the PRS from the base station B at a plurality of measurement timestamps after the measurement timestamp T1, and obtain one RSTD and one RSCPD, for the base station A, that correspond to each of the plurality of measurement timestamps, and one RSTD and one RSCPD, for the base station B, that correspond to each of the plurality of measurement timestamps.

Step 607: The UE sends PRS measurement information for the base station A and PRS measurement information for the base station B to the LMF network element. The LMF network element receives the PRS measurement information for the base station A and the PRS measurement information for the base station B.

For example, the PRS measurement information includes one second time measurement result and one or more carrier phase measurement results associated with the second time measurement result, the first time measurement result is an RSTD, and the carrier phase measurement result is an RSCPD. In an example, after the UE obtains corresponding RSTDs by measuring the PRS from the base station A at a plurality of measurement timestamps, and after the UE obtains a second time measurement result RSTD' by smoothing the RSTDs respectively corresponding to the plurality of measurement timestamps, the UE may associate the second time measurement result RSTD' with a part or all of RSCPDs respectively corresponding to the plurality of measurement timestamps, and report them to the LMF network element. In this case, the PRS measurement information sent by the UE to the LMF network element includes the second time measurement result RSTD' and the part or all of the RSCPDs respectively corresponding to the plurality of measurement timestamps associated with the second time measurement result RSTD'.

In another example, after the UE obtains corresponding RSTDs by measuring the PRS from the base station B at the plurality of measurement timestamps, and after the UE obtains a second time measurement result RSTD" by smoothing the RSTDs respectively corresponding to the plurality of measurement timestamps, the UE may associate the second time measurement result RSTD" with a part or all of RSCPDs respectively corresponding to the plurality of measurement timestamps, and report them to the LMF network element. In this case, the PRS measurement information sent by the UE to the LMF network element includes the second time measurement result RSTD" and the part or all of the RSCPDs respectively corresponding to the plurality of measurement timestamps associated with the second time measurement result RSTD".

Step 608: The LMF network element determines a location of the UE based on the PRS measurement information for the base station A and the PRS measurement information for the base station B.

For example, the PRS measurement information includes one second time measurement result and one or more carrier phase measurement results associated with the second time measurement result, the first time measurement result is an RSTD, and the carrier phase measurement result is an RSCPD. The LMF network element may perform corresponding differential calculation processing based on a second time measurement result RSTD' and one or more RSCPDs that are included in the PRS measurement information that is for the base station A and that is from the UE, and a second time measurement result RSTD' and one or more RSCPDs that are included in the PRS measurement information that is for the base station B and that is from the UE, to determine the location of the UE.

It can be learned from the foregoing step 601 to step 608 that, the UE may smooth a plurality of first time measurement results (for example, RSTDs or UE receive-transmit time differences) for the base station A, then associate a smooth result with one or more carrier phase measurement results (for example, an RSCPD) for the base station A, and report them to the LMF network element, and may smooth a plurality of first time measurement results (for example, RSTDs or UE receive-transmit time differences) for the base station B, then associate a smooth result with one or more carrier phase measurement results (for example, an RSCPD) for the base station B, and report them to the LMF network element. In this way, the number of reported first time measurement results can be reduced, so that resource overheads generated in a measurement result reporting process can be effectively reduced. In addition, because the plurality of first time measurement results are smoothed, impact of some unreliable first time measurement results on time estimation can be avoided. Therefore, time estimation precision can be improved.

In addition, the second time measurement result and the one or more carrier phase measurement results are reported together to the LMF network element. Therefore, this can effectively assist the LMF network element in performing corresponding carrier phase resolution. In addition, the UE may simultaneously report the plurality of carrier phase measurement results for the base station A to the LMF network element, and the UE may simultaneously report the plurality of carrier phase measurement results for the base station B to the LMF network element. Therefore, the LMF network element can obtain more carrier phase information and perform double-difference carrier phase resolution. Therefore, carrier phase resolution precision can be effectively improved.

Furthermore, because the first request sent by the LMF network element to the UE includes the measurement time information for measuring the PRS, the UE may simultaneously measure the PRS from the base station A and the PRS from the base station B at a corresponding time point, and then the UE separately reports the PRS measurement information for the base station A and the PRS measurement information for the base station B to the LMF network element. In this way, it can be ensured that the LMF network element can perform differential calculation processing by using the carrier phase measurement result that is included in the PRS measurement information and that is for the base station A and the carrier phase measurement result that is included in the PRS measurement information and that is for the base station B that are obtained by the UE through measurement at the same time. In this way, a random initial phase error between a terminal side and a base station side can be eliminated, and another carrier phase deviation can be eliminated. This helps improve carrier phase positioning precision.

FIG. 7A and FIG. 7B exemplarily illustrate a schematic flowchart of another positioning data transmission method according to an embodiment of this application. The method is applicable to the architectures of the communication systems shown in FIG. 1, FIG. 2a, and FIG. 2b. An application scenario of the positioning data transmission method shown in FIG. 7A and FIG. 7B is a positioning scenario in which there is a UE and a PRU. As shown in FIG. 7A and FIG. 7B, a specific procedure of the method may include the following steps.

Step 701: An LMF network element obtains a capability of the UE through an LTE positioning protocol capability transfer process.

Optionally, for an implementation used in step 701, refer to the implementation used in step 601. Details are not described herein again.

Step 702: The LMF network element separately sends a second request to a base station A and a base station B. The base station A and the base station B separately receive the second request.

Optionally, for an implementation used in step 702, refer to the implementation used in step 602. Details are not described herein again.

Step 703: The base station A and the base station B separately send attribute information to the LMF network element. The LMF network element separately receives the attribute information from the base station A and the base station B.

Optionally, for an implementation used in step 703, refer to the implementation used in step 603. Details are not described herein again.

Step 704: The LMF network element separately sends positioning assistance information to the UE and the PRU. The UE and PRU separately receive the positioning assistance information.

Optionally, for an implementation used in step 704, refer to the implementation used in step 604. Details are not described herein again.

Step 705: The LMF network element separately sends a first request to the UE and the PRU. The UE and the PRU separately receive the first request.

Optionally, for an implementation used in step 705, refer to the implementation used in step 605. Details are not described herein again.

For example, measurement time information that is for measuring a PRS and that is included in the first request for the UE may be the same as measurement time information that is for measuring a PRS and that is included in the first request for the PRU.

Step 706: The UE separately measures a PRS from the base station A and a PRS from the base station B, to obtain at least one first time measurement result and at least one carrier phase measurement result that are for the base station A and at least one first time measurement result and at least one carrier phase measurement result that are for the base station B.

Optionally, for an implementation used in step 706, refer to the implementation used in step 606. Details are not described herein again.

Step 707: The PRU separately measures the PRS from the base station A and the PRS from the base station B, to obtain at least one first time measurement result and at least one carrier phase measurement result that are for the base station A and at least one first time measurement result and at least one carrier phase measurement result that are for the base station B.

Optionally, the PRU may measure the PRS in an existing PRS measurement manner. Details are not described herein.

For example, the measurement time information is a measurement timestamp T1, the first time measurement result is an RSTD, and the carrier phase measurement result is an RSCPD. The PRU may start to separately measure the PRS from the base station A and the PRS from the base station B at the measurement timestamp T1, to obtain one RSTD and one RSCPD, for the base station A, that correspond to the measurement timestamp T1, and one RSTD and one RSCPD, for the base station B, that correspond to the measurement timestamp T1. In addition, the PRU may separately measure the PRS from the base station A and the PRS from the base station B at a plurality of measurement timestamps after the measurement timestamp T1, and obtain one RSTD and one RSCPD, for the base station A, that correspond to each of the plurality of measurement timestamps, and one RSTD and one RSCPD, for the base station B, that correspond to each of the plurality of measurement timestamps.

Optionally, in an example, an execution ranking of step 706 may be the same as an execution ranking of step 707, in other words, step 706 and step 707 are simultaneously performed. In another example, an execution ranking of step 706 may be different from an execution ranking of step 707, in other words, step 706 is performed before step 707, or step 707 is performed before step 706.

Step 708: The UE sends PRS measurement information for the base station A and PRS measurement information for the base station B to the LMF network element. The LMF network element receives the PRS measurement information for the base station A and the PRS measurement information for the base station B.

Optionally, for an implementation used in step 708, refer to the implementation used in step 607. Details are not described herein again.

Step 709: The PRU sends PRS measurement information for the base station A and PRS measurement information for the base station B to the LMF network element. The LMF network element receives the PRS measurement information for the base station A and the PRS measurement information for the base station B.

Optionally, for an implementation used in step 709, refer to the implementation used in step 607. Details are not described herein again.

Optionally, in an example, an execution ranking of step 708 may be the same as an execution ranking of step 709, in other words, step 708 and step 709 are simultaneously performed. In another example, an execution ranking of step 708 may be different from an execution ranking of step 709, in other words, step 708 is performed before step 709, or step 709 is performed before step 708.

Step 710: The LMF network element determines a location of the UE based on the PRS measurement information for the base station A and the PRS measurement information for the base station B that are from the UE and the PRS measurement information for the base station A and the PRS measurement information for the base station B that are from the PRU.

Optionally, for an implementation used in step 710, refer to the implementation used in step 608. Details are not described herein again.

It can be learned from the foregoing step 701 to step 710 that, the UE and the PRU may smooth a plurality of first time measurement results (for example, RSTDs or UE/PRU receive-transmit time differences) for the base station A, then associate a smooth result with one or more carrier phase measurement results (for example, an RSCPD) for the base station A, and report them to the LMF network element, and may smooth a plurality of first time measurement results (for example, RSTDs or UE/PRU receive-transmit time differences) for the base station B, then associate a smooth result with one or more carrier phase measurement results (for example, an RSCPD) for the base station B, and report them to the LMF network element. In this way, the number of reported first time measurement results can be reduced, so that resource overheads generated in a measurement result reporting process can be effectively reduced. In addition, because the plurality of first time measurement results are smoothed, impact of some unreliable first time measurement results on time estimation can be avoided. Therefore, time estimation precision can be improved.

In addition, the second time measurement result and the one or more carrier phase measurement results are reported together to the LMF network element. Therefore, this can effectively assist the LMF network element in performing corresponding carrier phase resolution. In addition, each of the UE and the PRU may simultaneously report the plurality of carrier phase measurement results for the base station A to the LMF network element, and each of the UE and the PRU may simultaneously report the plurality of carrier phase measurement results for the base station B to the LMF network element. Therefore, the LMF network element can obtain more carrier phase information and perform double-difference carrier phase resolution. Therefore, carrier phase resolution precision can be effectively improved.

Furthermore, because the first request sent by the LMF network element to the UE and the PRU includes the measurement time information for measuring the PRS, the UE and the PRU may simultaneously measure the PRS from the base station A and the PRS from the base station B at a corresponding time point, and then each of the UE and the PRU reports the PRS measurement information for the base station A and the PRS measurement information for the base station B to the LMF network element. In this way, it can be ensured that the LMF network element can perform double-difference calculation processing by using the carrier phase measurement result that is included in the PRS measurement information and that is for the base station A and the carrier phase measurement result that is included in the PRS measurement information and that is for the base station B that are obtained by the UE and the PRU through measurement at the same time. In this way, a random initial phase error between a terminal side and a base station side can be eliminated, and another carrier phase deviation can be eliminated. This helps improve carrier phase positioning precision.

It should be noted that in descriptions of this application, "at least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first", "second", and "third" in embodiments of this application are used to distinguish between a plurality of objects, and are not used to limit a sequence, a time sequence, priorities, or importance of the plurality of objects. In addition, the terms "include", "comprise", "have", and their variants in this application all mean "include but not limited to", unless otherwise specially emphasized in another manner.

In addition, it should be noted that each step in the foregoing embodiments may be performed by a corresponding device, or may be performed by a component like a chip, a processor, or a chip system in the device. This is not limited in embodiments of this application. The foregoing embodiments are described only by using an example in which steps are performed by corresponding devices.

It should be noted that in the foregoing embodiments, a part of the steps may be selected for implementation, or a sequence of the steps in the figure may be adjusted for implementation. This is not limited in this application. It should be understood that performing a part of the steps in the figure, adjusting a sequence of the steps, or combining the two manners for specific implementation shall all fall within the protection scope of this application.

It may be understood that, to implement functions in the foregoing embodiments, devices in the foregoing embodiments include corresponding hardware structures and/or software modules for performing the functions. A person skilled in the art should be easily aware that, with reference to the units and method steps in the examples described in embodiments disclosed in this application, this application can be implemented in a form of hardware or a combination of hardware and computer software. Whether a function is performed by hardware or hardware driven by computer software depends on particular application scenarios and design constraint conditions of the technical solutions.

It should be noted that the "step" in embodiments of this application is merely an example, and is a representation method used for better understanding of embodiments, and does not constitute a substantive limitation on performing of the solutions in this application. For example, the "step" may alternatively be understood as a "feature". In addition, the step does not constitute any limitation on an execution sequence of the solutions in this application, and a new technical solution formed through an operation, such as step sequence change, step combination, or step splitting, performed on this basis without affecting implementation of the overall solutions also falls within the scope disclosed in this application.

Based on a same concept, an embodiment of this application further provides a possible positioning data transmission apparatus. The positioning data transmission apparatus is applicable to the architectures of the communication systems shown in FIG. 1, FIG. 2a, and FIG. 2b. Optionally, the positioning data transmission apparatus may be a communication device (for example, a first communication apparatus or a location management apparatus), or an apparatus that can support a communication device in implementing a function required by the positioning data transmission method. Optionally, in an example, when the positioning data transmission apparatus is the first communication apparatus, the positioning data transmission apparatus is configured to implement the technical solution related to the first communication apparatus in the foregoing embodiments, or a module (for example, a chip) of the positioning data transmission apparatus is configured to implement the technical solution related to the first communication apparatus in the foregoing embodiments. Therefore, beneficial effects of the first communication apparatus in the foregoing embodiment can also be implemented. For example, when the positioning data transmission apparatus is a chip disposed in the first communication apparatus, the positioning data transmission apparatus includes a transceiver and a processor, but does not include a memory. The transceiver exists as an input/output interface, and the input/output interface is used by the chip to implement receiving and sending of the communication device. The input/output interface may include an input interface and/or an output interface. The input interface may implement receiving of the communication device, and the output interface may be configured to implement sending of the communication device. The processor is configured to read and execute a corresponding computer program or instructions, so that a corresponding function of the first communication apparatus is implemented. Optionally, when the chip implements a corresponding function of the first communication apparatus in the foregoing embodiments, the input/output interface may implement a receiving/sending operation performed by the first communication apparatus in the foregoing embodiments; and the processor may implement an operation, other than the receiving/sending operation, performed by the first communication apparatus in the foregoing embodiments. For detailed related descriptions, refer to related descriptions in the foregoing embodiments. Details are not described herein again. For example, the first communication apparatus may be the RAN device shown in FIG. 1, FIG. 2a, or FIG. b. In another example, when the positioning data transmission apparatus is the location management apparatus, the positioning data transmission apparatus is configured to implement the technical solution related to the location management apparatus in the foregoing embodiments, or a module (for example, a chip) of the positioning data transmission apparatus is configured to implement the technical solution related to the location management apparatus in the foregoing embodiments. Therefore, beneficial effects of the location management apparatus in the foregoing embodiment can also be implemented. For example, when the positioning data transmission apparatus is a chip disposed in the location management apparatus, the positioning data transmission apparatus includes a transceiver and a processor, but does not include a memory. The transceiver exists as an input/output interface, and the input/output interface is used by the chip to implement receiving and sending of the communication device. The input/output interface may include an input interface and/or an output interface. The input interface may implement receiving of the communication device, and the output interface may be configured to implement sending of the communication device. The processor is configured to read and execute a corresponding computer program or instructions, so that a corresponding function of the location management apparatus is implemented. Optionally, when the chip implements a corresponding function of the location management apparatus in the foregoing embodiments, the input/output interface may implement a receiving/sending operation performed by the location management apparatus in the foregoing embodiments; and the processor may implement an operation, other than the receiving/sending operation, performed by the location management apparatus in the foregoing embodiments. For detailed related descriptions, refer to related descriptions in the foregoing embodiments. Details are not described herein again. For example, the location management apparatus may be the LMF network element included in the core network shown in FIG. 1, FIG. 2a, or FIG. 2b.

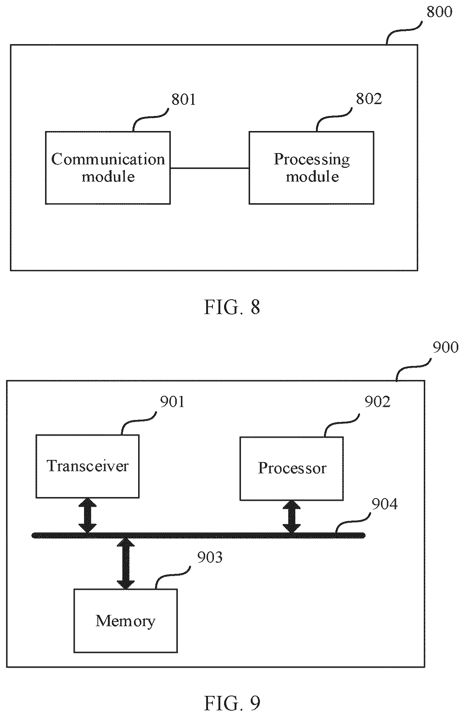

Refer to FIG. 8. A positioning data transmission apparatus 800 includes a communication module 801 (or referred to as a transceiver module, configured to send and receive data) and a processing module 802. The positioning data transmission apparatus 800 is configured to implement the function of the first communication apparatus (for example, the network device, the UE, the PRU, or the UE and the PRU) or the location management apparatus (for example, the LMF network element) in the method embodiments shown in FIG. 3 to FIG. 7B.

Optionally, the communication module 801 may include a receiving module and/or a sending module. The receiving module may be used by the positioning data transmission apparatus 800 to receive a signal (information, data, or the like). The sending module may be used by the positioning data transmission apparatus 800 to send a signal (information, data, or the like). The sending module may send a signal (information, data, or the like) under control of the processing module 802, and the receiving module may receive a signal (information, data, or the like) under control of the processing module 802.

When the positioning data transmission apparatus 800 is configured to implement the function of the first communication apparatus in the method embodiments shown in FIG. 3 to FIG. 7B, the communication module 801 is configured to receive a first request from a location management apparatus, where the first request is used to request to report a measurement result of a positioning reference signal; the processing module 802 is configured to measure the positioning reference signal from a second communication apparatus, to obtain at least one first time measurement result and at least one carrier phase measurement result; and the communication module 801 is further configured to send first information to the location management apparatus, where the first information includes a second time measurement result and the at least one carrier phase measurement result, the second time measurement result is associated with the at least one carrier phase measurement result, and the second time measurement result is obtained based on the at least one first time measurement result.

When the positioning data transmission apparatus 800 is configured to implement the function of the first communication apparatus in the method embodiments shown in FIG. 3 to FIG. 7B, for more detailed descriptions of the communication module 801 and the processing module 802, refer to related descriptions of the first communication apparatus in the method embodiments shown in FIG. 3 to FIG. 7B. Details are not described herein again.

When the positioning data transmission apparatus 800 is configured to implement the function of the location management apparatus in the method embodiments shown in FIG. 3 to FIG. 7B, the communication module 801 is configured to send a first request to a first communication apparatus, where the first request is used to request to report a measurement result of a positioning reference signal; the communication module 801 is further configured to receive first information from the first communication apparatus, where the first information includes a second time measurement result and at least one carrier phase measurement result, the second time measurement result is associated with the at least one carrier phase measurement result, the second time measurement result is obtained based on at least one first time measurement result, and the at least one first time measurement result and the at least one carrier phase measurement result are obtained by the first communication apparatus by measuring the positioning reference signal from a second communication apparatus; and the processing module 802 is configured to position the second communication apparatus or the first communication apparatus based on the first information.

When the positioning data transmission apparatus 800 is configured to implement the function of the location management apparatus in the method embodiments shown in FIG. 3 to FIG. 7B, for more detailed descriptions of the communication module 801 and the processing module 802, refer to related descriptions of the location management apparatus in the method embodiments shown in FIG. 3 to FIG. 7B. Details are not described herein again.

It should be understood that in this embodiment of this application, the communication module 801 may be implemented by a transceiver or a transceiver-related circuit component, and the processing module 802 may be implemented by a processor or a processor-related circuit component.

It should be noted that division into the modules in embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on a same concept, this application further provides a possible communication device. The communication device is applicable to the architecture of the communication system shown in FIG. 1, FIG. 2a, or FIG. 2b. Optionally, the communication device may be an apparatus (for example, a first communication apparatus, a second communication apparatus, or a location management apparatus) required for performing the positioning data transmission method provided in embodiments of this application, may be a device including an apparatus required for performing the positioning data transmission method provided in embodiments of this application, or may be a device having a function required for implementing the positioning data transmission method. Optionally, the communication device may alternatively be a chip disposed in the first communication apparatus (for example, a network device, a UE, a PRU, or a UE and a PRU) or the location management apparatus (for example, an LMF network element). When the communication device is the chip disposed in the first communication apparatus or the location management apparatus, the communication device includes a transceiver and a processor, but does not include a memory. The transceiver exists as an input/output interface, and the input/output interface is used by the chip to implement receiving and sending of the communication device. The input/output interface may include an input interface and/or an output interface. The input interface may implement receiving of the communication device, and the output interface may be configured to implement sending of the communication device. The processor is configured to read and execute a corresponding computer program or instructions, so that the chip implements a corresponding function of the first communication apparatus or the location management apparatus. Optionally, when the chip implements a corresponding function of the first communication apparatus (or the location management apparatus) in the foregoing embodiments, the input/output interface may implement a receiving/sending operation performed by the first communication apparatus (or the location management apparatus) in the foregoing embodiments; and the processor may implement an operation, other than the receiving/sending operation, performed by the first communication apparatus (or the location management apparatus) in the foregoing embodiments. For detailed related descriptions, refer to related descriptions in the foregoing embodiments. Details are not described herein again. For example, the communication device is the first communication apparatus (for example, the network device, the UE, the PRU, or the UE and the PRU) or the location management apparatus (for example, the LMF network element). When the communication device is configured to implement the technical solution related to the first communication apparatus in the foregoing embodiments, beneficial effects of the first communication apparatus in the foregoing method embodiments can also be implemented. When the communication device is configured to implement the technical solution related to the location management apparatus in the foregoing embodiments, beneficial effects of the location management apparatus in the foregoing method embodiments can also be implemented. As shown in FIG. 9, the communication device 900 includes a transceiver 901 and a processor 902. Optionally, the communication device 900 further includes a memory 903. The transceiver 901, the processor 902, and the memory 903 are connected to each other. When the communication device 900 is configured to implement the technical solution related to the first communication apparatus provided in the foregoing embodiments, the transceiver 901 may be configured to implement the function of the communication module 801 when the communication module 801 performs the technical solution related to the first communication apparatus, and the processor 902 is configured to implement the function of the processing module 802 when the processing module 802 performs the technical solution related to the first communication apparatus. When the communication device 900 is configured to implement the technical solutions related to the location management apparatus provided in the foregoing embodiments, the transceiver 901 may be configured to implement the function of the communication module 801 when the communication module 801 performs the technical solution related to the location management apparatus, and the processor 902 is configured to implement the function of the processing module 802 when the processing module 802 performs the technical solution related to the location management apparatus.

Optionally, the transceiver 901, the processor 902, and the memory 903 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

The transceiver 901 is configured to receive and send data. For example, when the communication device 900 is the terminal device shown in FIG. 1, FIG. 2a, or FIG. 2b, the transceiver 901 communicates with the RAN device shown in FIG. 1, FIG. 2a, or FIG. 2b, or may communicate with another device (for example, a terminal device) outside the architecture of the communication system shown in FIG. 1, FIG. 2a, or FIG. 2b. When the communication device 900 is the RAN device shown in FIG. 1, FIG. 2a, or FIG. 2b, the transceiver 901 communicates with the terminal device shown in FIG. 1, FIG. 2a, or FIG. 2b, or may communicate with another device (for example, a terminal device) outside the architecture of the communication system shown in FIG. 1, FIG. 2a, or FIG. 2b. When the communication device 900 is the LMF network element included in the core network shown in FIG. 1, FIG. 2a, or FIG. 2b, the transceiver 901 communicates with the AMF network element shown in FIG. 1, FIG. 2a, or FIG. 2b, to communicate with a RAN device through the AMF network element. Optionally, in an example, the transceiver may be a transceiver apparatus integrated with a data transceiver function. In another example, the transceiver may alternatively include a transmitter and a receiver. The transmitter is configured to send data, and the receiver is configured to receive data.

Optionally, the transceiver 901 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 902. The receiver receives a signal, a message, information, data, or the like under control of the processor 902.

For a function of the processor 902, refer to descriptions of the corresponding function related to the first communication apparatus or the location management apparatus in the foregoing embodiments. Details are not described herein again. The processor 902 may be a central processing unit (central processing unit, CPU), a network processor (network processor, NP), a combination of a CPU and an NP, or the like. The processor 902 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. The processor 902 may implement the foregoing function by hardware or by hardware executing corresponding software.

The memory 903 is configured to store program instructions, and the like. Specifically, the program instructions may include program code. The program code includes computer operation instructions. The memory 903 may include a random access memory (random access memory, RAM), and may further include a non-volatile memory (non-volatile memory), for example, at least one magnetic disk memory. The processor 902 executes the program instructions stored in the memory 903 to implement the foregoing function, so as to implement the method steps that need to be performed by the first communication apparatus or the location management apparatus in the foregoing embodiments.

Based on a same concept, an embodiment of this application further provides a communication system. The communication system includes a first communication apparatus, a second communication apparatus, and a location management apparatus. The first communication apparatus may be configured to implement the technical solution related to the first communication apparatus in the foregoing embodiments, the second communication apparatus may be configured to implement the technical solution related to the second communication apparatus in the foregoing embodiments, and the location management apparatus may be configured to implement the technical solution related to the location management apparatus in the foregoing embodiments.

Based on a same concept, an embodiment of this application further provides a computer program product. The computer program product includes a computer program or instructions. When the computer program or the instructions are run on a computer, the computer is caused to perform the method provided in the foregoing embodiments.

Based on a same concept, an embodiment of this application further provides a computer-readable storage medium. The computer-readable storage medium stores a computer program or instructions. When the computer program or the instructions are executed by a computer, the computer is caused to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage, or a disk storage medium or another disk storage device, or any other medium that can carry or store expected program code in a form of an instruction or a data structure and can be accessed by a computer.

Based on a same concept, an embodiment of this application further provides a chip, including a processor. The processor is coupled to a memory, and is configured to execute a computer program or instructions stored in the memory. When the processor executes the computer program or the instructions, the method provided in the foregoing embodiments is implemented.

Based on a same concept, an embodiment of this application further provides a chip system. The chip system includes a processor, configured to support a computer apparatus in implementing the function related to the first communication apparatus, the second communication apparatus, or the location management apparatus in the foregoing embodiments. In a possible design, the chip system further includes a memory, and the memory is configured to store a program and data that are necessary for the computer apparatus. The chip system may include a chip; or may include a chip and another discrete device.

All or some of the methods in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

Steps of the methods described in embodiments of this application may be directly embedded into hardware, a software unit executed by a processor, or a combination thereof. The software unit may be stored in a RAM, a ROM, an EEPROM, a register, a hard disk drive, a removable magnetic disk, a CD-ROM, or a storage medium of any other form in the art. For example, the storage medium may be connected to the processor, so that the processor may read information from the storage medium and write information to the storage medium. Optionally, the storage medium may alternatively be integrated into the processor. The processor and the storage medium may be disposed in an ASIC.

This application is described with reference to the flowcharts and/or block diagrams of the method, the device (system), and the computer program product according to this application. It should be understood that computer program instructions may be used for implementing each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A positioning data transmission method, comprising:
sending, by a location management apparatus, a first request to a first communication apparatus, wherein the first request is used to request to report a measurement result of a positioning reference signal;
sending, by the first communication apparatus, first information to the location management apparatus, wherein the first information comprises a time measurement result and at least one carrier phase measurement result, and the time measurement result is associated with the at least one carrier phase measurement result; and
positioning, by the location management apparatus, the second communication apparatus or the first communication apparatus based on the first information.

2. A positioning data transmission method, applied to a first communication apparatus, wherein the method comprises:
receiving a first request from a location management apparatus, wherein the first request is used to request to report a measurement result of a positioning reference signal; and
sending first information to the location management apparatus, wherein the first information comprises a time measurement result and at least one carrier phase measurement result, and the time measurement result is associated with the at least one carrier phase measurement result.

3. A positioning data transmission method, applied to a location management apparatus, wherein the method comprises:
sending a first request to a first communication apparatus, wherein the first request is used to request to report a measurement result of a positioning reference signal;
receiving first information from the first communication apparatus, wherein the first information comprises a time measurement result and at least one carrier phase measurement result, and the time measurement result is associated with the at least one carrier phase measurement result; and
positioning the second communication apparatus or the first communication apparatus based on the first information.

4. The method according to any one of claims 1 to 3, wherein when there is one time measurement result, the time measurement result is associated with the at least one carrier phase measurement result; or
when there are a plurality of time measurement results, the plurality of time measurement results are associated with the at least one carrier phase measurement result.

5. The method according to any one of claims 1 to 4, wherein the first request comprises measurement time information for measuring the positioning reference signal, and the measurement time information comprises one of the following content: a measurement time window or a measurement timestamp.

6. The method according to any one of claims 1 to 5, wherein the first request further comprises indication information, and the indication information indicates that the number of reported time measurement results is the same as the number of reported carrier phase measurement results, or the indication information indicates that the number of reported time measurement results is different from the number of reported carrier phase measurement results.

7. The method according to any one of claims 1 to 6, wherein the time measurement result is obtained based on at least one sample.

8. The method according to claim 7, wherein the time measurement result is obtained by measuring a positioning reference signal corresponding to the at least one sample.

9. The method according to any one of claims 1 to 8, wherein the time measurement result comprises at least one of the following: a relative time of arrival RTOA, a reference signal time difference RSTD, or a receive-transmit time difference; and the carrier phase measurement result comprises at least one of the following: a reference signal carrier phase RSCP, a reference signal carrier phase difference RSCPD, carrier phases of a plurality of subbands, a carrier phase difference in a plurality of subbands, carrier phases of a plurality of frequencies, or a carrier phase difference in a plurality of frequencies.

10. The method according to any one of claims 1 to 9, wherein the time measurement result and the at least one carrier phase measurement result are sent via same reporting information, or the time measurement result and the at least one carrier phase measurement result are sent in a same reporting period.

11. A positioning data transmission apparatus, used in a first communication apparatus, wherein the apparatus comprises a communication module and a processing module, wherein
the communication module is configured to receive a first request from a location management apparatus, wherein the first request is used to request to report a measurement result of a positioning reference signal; and
the communication module is further configured to send first information to the location management apparatus, wherein the first information comprises a time measurement result and at least one carrier phase measurement result, and the time measurement result is associated with the at least one carrier phase measurement result.

12. A positioning data transmission apparatus, used in a location management apparatus, wherein the apparatus comprises a communication module and a processing module, wherein
the communication module is configured to send a first request to a first communication apparatus, wherein the first request is used to request to report a measurement result of a positioning reference signal;
the communication module is further configured to receive first information from the first communication apparatus, wherein the first information comprises a time measurement result and at least one carrier phase measurement result, and the time measurement result is associated with the at least one carrier phase measurement result; and
the processing module is configured to position the second communication apparatus or the first communication apparatus based on the first information.

13. The apparatus according to claim 11 or 12, wherein when the first communication apparatus is a network device, the second communication apparatus comprises at least one of the following: a terminal device or a positioning assistance node; or
when the second communication apparatus is a network device, the first communication apparatus comprises at least one of the following: a terminal device or a positioning assistance node.

14. A positioning data transmission method, comprising:
sending, by a location management apparatus, a first request to a first communication apparatus, wherein the first request is used to request to report a measurement result of a positioning reference signal;
measuring, by the first communication apparatus, the positioning reference signal from a second communication apparatus based on the first request, to obtain at least one first time measurement result and at least one carrier phase measurement result;
sending, by the first communication apparatus, first information to the location management apparatus, wherein the first information comprises a second time measurement result and the at least one carrier phase measurement result, the second time measurement result is obtained based on the at least one first time measurement result, and the second time measurement result is associated with the at least one carrier phase measurement result; and
positioning, by the location management apparatus, the second communication apparatus or the first communication apparatus based on the first information.

15. A positioning data transmission method, applied to a first communication apparatus, wherein the method comprises:
receiving a first request from a location management apparatus, wherein the first request is used to request to report a measurement result of a positioning reference signal;
measuring the positioning reference signal from a second communication apparatus, to obtain at least one first time measurement result and at least one carrier phase measurement result; and
sending first information to the location management apparatus, wherein the first information comprises a second time measurement result and the at least one carrier phase measurement result, the second time measurement result is obtained based on the at least one first time measurement result, and the second time measurement result is associated with the at least one carrier phase measurement result.

16. A positioning data transmission method, applied to a location management apparatus, wherein the method comprises:
sending a first request to a first communication apparatus, wherein the first request is used to request to report a measurement result of a positioning reference signal;
receiving first information from the first communication apparatus, wherein the first information comprises a second time measurement result and at least one carrier phase measurement result, the second time measurement result is associated with the at least one carrier phase measurement result, the second time measurement result is obtained based on the at least one first time measurement result, and the at least one first time measurement result and the at least one carrier phase measurement result are obtained by the first communication apparatus by measuring the positioning reference signal from a second communication apparatus; and
positioning the second communication apparatus or the first communication apparatus based on the first information.

17. The method according to any one of claims 14 to 16, wherein when there is one second time measurement result, the second time measurement result is associated with the at least one carrier phase measurement result; or
when there are a plurality of second time measurement results, the plurality of second time measurement results are associated with the at least one carrier phase measurement result.

18. The method according to any one of claims 14 to 17, wherein when there is one first time measurement result and one or more carrier phase measurement results, the first time measurement result is associated with the one or more carrier phase measurement results;
when there are a plurality of first time measurement results and one carrier phase measurement result, the plurality of first time measurement results are associated with the carrier phase measurement result; or
when there are a plurality of first time measurement results and a plurality of carrier phase measurement results, the plurality of first time measurement results are associated with a part or all of the plurality of carrier phase measurement results.

19. The method according to any one of claims 14 to 18, wherein the first request comprises measurement time information for measuring the positioning reference signal, and the measurement time information comprises one of the following content: a measurement time window or a measurement timestamp.

20. The method according to any one of claims 14 to 19, wherein the first request further comprises indication information, and the indication information indicates that the number of reported time measurement results is the same as the number of reported carrier phase measurement results, or the indication information indicates that the number of reported time measurement results is different from the number of reported carrier phase measurement results.

21. The method according to any one of claims 14 to 20, wherein when there is one first time measurement result, the first time measurement result is used as the second time measurement result.

22. The method according to any one of claims 14 to 21, wherein when there are a plurality of first time measurement results, the second time measurement result is obtained by smoothing the plurality of first time measurement results.

23. The method according to any one of claims 14 to 22, wherein when there are a plurality of first time measurement results, a first time measurement result corresponding to a largest measurement timestamp in the plurality of first time measurement results is used as the second time measurement result.

24. The method according to any one of claims 14 to 23, wherein the second time measurement result and the at least one carrier phase measurement result are sent via same reporting information, or the second time measurement result and the at least one carrier phase measurement result are sent in a same reporting period.

25. The method according to any one of claims 14 to 24, wherein the second time measurement result corresponds to a first measurement timestamp, each of the at least one carrier phase measurement result corresponds to one second measurement timestamp, and the first measurement timestamp corresponds to one of at least one second measurement timestamp respectively corresponding to the at least one carrier phase measurement result.

26. The method according to any one of claims 14 to 25, wherein when the first communication apparatus is a positioning assistance node, the method further comprises:
sending, by the positioning assistance node, the first information to a terminal device through a sidelink.

27. The method according to any one of claims 14 to 26, wherein the first time measurement result or the second time measurement result comprises at least one of the following: a relative time of arrival RTOA, a reference signal time difference RSTD, or a receive-transmit time difference; and the carrier phase measurement result comprises at least one of the following: a reference signal carrier phase RSCP, a reference signal carrier phase difference RSCPD, carrier phases of a plurality of subbands, a carrier phase difference in a plurality of subbands, carrier phases of a plurality of frequencies, or a carrier phase difference in a plurality of frequencies.

28. A positioning data transmission apparatus, used in a first communication apparatus, wherein the apparatus comprises a communication module and a processing module, wherein
the communication module is configured to receive a first request from a location management apparatus, wherein the first request is used to request to report a measurement result of a positioning reference signal;
the processing module is configured to measure the positioning reference signal from a second communication apparatus, to obtain at least one first time measurement result and at least one carrier phase measurement result; and
the communication module is further configured to send first information to the location management apparatus, wherein the first information comprises a second time measurement result and the at least one carrier phase measurement result, the second time measurement result is obtained based on the at least one first time measurement result, and the second time measurement result is associated with the at least one carrier phase measurement result.

29. A positioning data transmission apparatus, used in a location management apparatus, wherein the apparatus comprises a communication module and a processing module, wherein
the communication module is configured to send a first request to a first communication apparatus, wherein the first request is used to request to report a measurement result of a positioning reference signal;
the communication module is further configured to receive first information from the first communication apparatus, wherein the first information comprises a second time measurement result and at least one carrier phase measurement result, the second time measurement result is associated with the at least one carrier phase measurement result, the second time measurement result is obtained based on the at least one first time measurement result, and the at least one first time measurement result and the at least one carrier phase measurement result are obtained by the first communication apparatus by measuring the positioning reference signal from a second communication apparatus; and
the processing module is configured to position the second communication apparatus or the first communication apparatus based on the first information.

30. The apparatus according to claim 28 or 29, wherein when the first communication apparatus is a network device, the second communication apparatus comprises at least one of the following: a terminal device or a positioning assistance node; or
when the second communication apparatus is a network device, the first communication apparatus comprises at least one of the following: a terminal device or a positioning assistance node.

31. A communication device, comprising:
a transceiver, configured to: receive and send data;
a memory, configured to store computer program instructions and data; and
a processor, configured to execute and invoke the computer program instructions and the data in the memory, to cause the communication device to perform the method according to any one of claims 1 to 10 or the method according to any one of claims 14 to 27.

32. A computer-readable storage medium, wherein the computer-readable storage medium stores a computer program or instructions; and when the computer program or the instructions are executed by a computer, the computer is caused to perform the method according to any one of claims 1 to 10 or the method according to any one of claims 14 to 27.

33. A computer program product, wherein the computer program product comprises a computer program or instructions; and when the computer program or the instructions are run on a computer, the computer is caused to perform the method according to any one of claims 1 to 10 or the method according to any one of claims 14 to 27.

34. A chip, comprising a processor, wherein the processor is coupled to a memory, and is configured to execute a computer program or instructions stored in the memory; and when the processor executes the computer program or the instructions, the method according to any one of claims 1 to 10 or the method according to any one of claims 14 to 27 is performed.
